(19) Europäisches Patentamt
European Patent Office
Office européen des brevets

(11) **EP 4 273 792 A1**

(12) **EUROPEAN PATENT APPLICATION**

(43) Date of publication:
**08.11.2023 Bulletin 2023/45**

(21) Application number: **22172105.3**

(22) Date of filing: **06.05.2022**

(51) International Patent Classification (IPC):
*G06T 5/00* (2006.01)     *G06T 7/11* (2017.01)
*G06T 7/187* (2017.01)    *G06T 7/33* (2017.01)
*G06T 7/579* (2017.01)

(52) Cooperative Patent Classification (CPC):
**G06T 7/11; G06T 7/143; G06T 7/187; G06T 7/194;**
**G06T 17/00;** G06T 2207/10024; G06T 2207/10028;
G06T 2207/30196; G06T 2210/44; G06T 2210/56

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Applications Mobiles Overview Inc.**
**Montréal, Québec H4C 1P8 (CA)**

(72) Inventors:
• **JUPPE, Laurent**
**Montreal, H3J 2P7 (CA)**

• **ABUELWAFA, Sherif Esmat Omar**
**Montreal, H3C 0L7 (CA)**
• **DESROCHERS, Marie-Eve**
**Montreal, H4C 1P8 (CA)**
• **LAVALLÉE, Annie-Pier**
**Montreal, H4C 1P8 (CA)**
• **HOURIIA, Asma Iben**
**Montreal, H4C 1P8 (CA)**
• **MARTIN, Bryan**
**Montreal, H4C 1P8 (CA)**

(74) Representative: **BCF Global**
**Centre d'Entreprise et d'Innovation**
**56, Bd Niels Bohr**
**CS 52132**
**69603 Villeurbanne Cedex (FR)**

(54) **METHOD FOR REMOVING NOISE FROM A 3D POINT CLOUD**

(57)     The disclosed systems, structures, and methods are directed to removing noise from a 3D point cloud. Removing noise from the 3D point cloud includes applying a first de-noising phase to the 3D point cloud, the first de-noising phase including: segmenting the 3D point cloud into regions; merging regions into clusters; and optimizing the clusters by removing points that are statistical outliers to a cluster from the 3D point cloud. Additionally, a second de-noising phase is applied to the 3D point cloud, to identify a gravity-oriented surface in the 3D point cloud and remove points associated with the gravity-oriented surface from the 3D point cloud. A third de-noising phase is applied to the 3D point cloud to remove delocalized noise associated with the gravity-oriented surface from the 3D point cloud.

FIG. 1

## Description

## FIELD

The present technology relates to systems and methods of generating a 3D representation of an object, and in particular to de-noising a point cloud produced by scanning a 3D object.

## BACKGROUND

Three-dimensional ("3D") digital data may be produced by a variety of devices that involve three-dimensional scanning or sampling and/or numerical modeling. In one example, 3D laser scanners generate 3D digital data. A long range laser scanner is fixed in one location and rotated to scan objects around it. Alternatively, a short-range laser scanner is mounted on a device that moves around an object while scanning it. In any of the scenarios, the location of each point scanned is represented as a polar coordinate since the angle between the scanner and the object and distance from the scanner to the object are known. The polar coordinates are then converted to 3D Cartesian coordinates and stored along with a corresponding intensity or color value for the data point collected by the scanner.

Other examples to generate 3D digital data are depth cameras or 3D scanner to generate 3D digital data by collecting a complete point set of (x, y, z) locations that represent the shape of an object. Once collected, these point sets, also known as 3D point clouds, are sent to an image rendering system, which then processes the point data to generate a 3D representation of the object.

Typical systems and methods to capture 3D point clouds and then generate 3D representation of the object require specialized, cumbersome and costly hardware equipment. To this end, there is an interest in developing cost effective systems and methods to generate 3D representation from 3D point clouds.

## SUMMARY

Implementations of the present technology have been developed based on developers' appreciation of at least one technical problem associated with the prior art solutions.

For example, even though the prior art suggests techniques to generate 3D point clouds, such techniques often require specialized, cumbersome and costly hardware equipment such as 3D laser scanners to produce a point cloud of sufficient quality to permit, *e.g.,* generation of a 3D representation of an object. Even point clouds produced by such specialized hardware may still contain enough noise to cause difficulties in processing the point cloud. Additionally, it may be desirable to effectively filter out portions of a point cloud that are not related to an object of interest in the point cloud, such as a surface on which an object of interest is resting.

Additionally, it is now possible to use non-specialized hardware, such as a mobile device comprising a camera (*e.g.,* an iPhone® from Apple or a Galaxy® from Samsung) to acquire a 3D point cloud. However, point clouds obtained from such non-specialized hardware may include even more noise than point clouds obtained using specialized 3D scanning hardware, making noise removal even more important.

In accordance with a first aspect of the present technology, there is provided a computer-implemented method of removing noise from a 3D point cloud. The method includes accessing a 3D point cloud, and applying a first de-noising phase to the 3D point cloud. The first de-noising phase includes segmenting the 3D point cloud into regions, merging regions into clusters, and optimizing the clusters by removing points that are statistical outliers to a cluster from the 3D point cloud. The method further includes applying a second de-noising phase to the 3D point cloud, the second de-noising phase identifying a planar surface in the 3D point cloud and removing points associated with the planar surface from the 3D point cloud. The method further includes applying a third de-noising phase to the 3D point cloud, the third de-noising phase removing delocalized noise associated with the planar surface from the 3D point cloud.

In some implementations, segmenting the 3D point cloud into regions includes geometric-based region growing.

In some implementations, segmenting the 3D point cloud into regions includes color-based region growing.

In some implementations, merging regions into clusters includes merging two regions if the difference between the average color of each of the regions is below a predetermined threshold and the regions are neighbor regions.

In some implementations, merging regions into clusters includes merging a region containing fewer points than a predetermined small region threshold with its nearest neighbor region.

In some implementations, merging regions into clusters includes removing a region containing fewer points than a predetermined too small region threshold from the 3D point cloud.

In some implementations, optimizing the clusters by removing points that are statistical outliers to a cluster from the 3D point cloud includes statistical color outlier filtering.

In some implementations, identifying the planar surface in the 3D point cloud includes identifying a surface in the point cloud that is perpendicular to a reference axis and that is located in a vicinity of extremities of the point cloud.

In some implementations, the points associated with the planar surface excludes points with normal vectors having an orientation that does not correspond to the surface normal orientation of the planar surface.

In some implementations, the planar surface includes a gravity-oriented surface.

In some implementations, identifying the planar surface in the 3D point cloud includes identifying a surface in the point cloud that is perpendicular to a gravity axis and that is located in a lower third of the point cloud.

In some implementations, the second de-noising phase further includes using statistical outlier removal to remove sparse points in the lower third of the 3D point cloud.

In some implementations, the third de-noising phase uses color-based filtering to remove delocalized noise associated with the planar surface.

In some implementations, the method further includes applying a transformation to refine the scaling and orientation of the 3D point cloud.

In another aspect of the technology, a computer-implemented method of generating data points in a 3D point cloud from a plurality of images is provided. The method includes obtaining a plurality of world coordinate images from a camera including an inertial measurement unit. The method also includes performing an initial alignment process to realign and scale estimated camera positions to obtain a plurality of estimated coordinate images. The method further includes refining the initial alignment using a scaling iterative corresponding points method, including a full trajectory process that aligns world and estimated trajectory curves and a single indexed pairs process that applies a scaling iterative corresponding points technique on single pairs from world coordinate images and estimated coordinate images having corresponding indices, and combining the fill trajectory process with the single indexed pairs process.

In some implementations performing the initial alignment process comprises using a random sampling consensus method.

In some implementations the method further includes use of a non-scaling iterative corresponding points method applied to a predetermined number of randomly generated pairs for each camera position in a world coordinate system.

In a further aspect of the technology, a computer-implemented method of de-noising a cluster of points in a 3D point cloud using statistical color outlier filtering, each point including color information in a plurality of color channels is provided. The method includes: determining a mean and a standard deviation of each color channel for each point in the cluster of points and a number of neighboring points in the cluster of points; determining that a point is an outlier in the cluster if one of the point's color channels has a value that is outside of a predefined multiple of the standard deviation from the mean of that color channel; and removing as noise points that are outliers.

In some implementations, the number of neighboring points is based on a mean number of points inside a volume of a predefined radius.

In some implementations, the predefined radius is based on a resolution of the 3D point cloud.

In some implementations, the plurality of color channels are channels of a color space, the color space being selected in a group of color spaces comprising but not limited to: Hue-Saturation-Value color space, Red-Green-Blue color space and Hue-Saturation-Intensity color space.

In some implementations, the plurality of color channels comprises a red color channel, a green color channel, and a blue color channel.

In a yet another aspect of the technology, a computer-implemented method of de-noising a 3D point cloud is provided. The method includes: identifying a planar surface in the 3D point cloud by identifying a surface in the 3D point cloud that is perpendicular to a reference axis; and removing points associated with the planar surface from the 3D point cloud, by removing points near the planar surface that have normal vectors having an orientation within a predetermined angle of a surface normal orientation of the planar surface.

In some implementations, the planar surface comprises a gravity-oriented surface, and the reference axis comprises a gravity axis.

## BRIEF DESCRIPTION OF THE DRAWINGS

These and other features, aspects and advantages of the present technology will be better understood with regard to the following description, appended claims and accompanying drawings where:

FIG. 1 is an illustration of an environment for executing a method of removing noise from a 3D point cloud;

FIG. 2 shows an overview of an implementation of the disclosed de-noising technology;

FIG. 3 is a block diagram of a transformation matrix-based scale and orientation refinement process according to the disclosed technology;

FIG 4 shows an example of a translation ratio distribution in accordance with the disclosed technology;

FIG. 5 shows an example of an alignment between world coordinate system image positions and estimated positions before and after application of an iterative corresponding points (ICP) algorithm in accordance with the disclosed technology;

FIG. 6 illustrates regions of a point cloud (shown in 2D for clarity) having low and high curvatures;

FIG. 7 is a block diagram of a first portion of geometric-based region growing in a point cloud, in which initial seed points are defined;

FIG. 8 illustrates selection of an initial seed point;

FIG. 9 is a block diagram of a second portion of the first segmentation process, continuing the geometric-based region growing of FIG. 7 with initial region growing;

FIG. 10 illustrates a neighborhood defined around a seed point;

FIG. 11 illustrates normal vectors for each of the points in a neighborhood;

FIG. 12 illustrates formation of a region including points from a neighborhood that meet a geometrical criterion;

FIG. 13 illustrates identification of additional seed points within a neighborhood;

FIG. 14 is a block diagram of a third portion of the first segmentation process, continuing the geometric-based region growing of FIGS. 7 and 9 with additional region growing;

FIG. 15 illustrates selection of a seed point that is already assigned to a region;

FIG. 16 illustrates selection of a seed point that is not already assigned to a region;

FIG. 17 illustrates an expanded region and a new region;

FIG. 18 is a block diagram of a first portion of color-based region growing in a point cloud, in which initial seed points are defined;

FIG. 19 is a block diagram of a second portion of the second segmentation process, continuing the color-based region growing of FIG. 18 with initial region growing;

FIG. 20 is a block diagram of a third portion of the segmentation process, continuing the color-based region growing of FIGS. 18 and 19 with additional region growing;

FIG. 21 illustrates closest neighbor distance in a point cloud;

FIG. 22 is a block diagram of a process for merging regions into clusters and a process for optimizing clusters through statistical color outlier filtering;

FIG. 23 shows example radius based on resolution around a first and a second point;

FIGS. 24 and 25 illustrate statistical outlier filtering to obtain optimized clusters;

FIGS. 26 and 27 illustrate statistical outlier filtering for fine outlier filtering;

FIG. 28 shows a "raw" point cloud with colors;

FIG. 29 shows color-based outliers in the point cloud of FIG. 23;

FIG. 30 shows a filtered point cloud after the removal of the outliers of FIG. 24;

FIG. 31 is a block diagram of the third segmentation process, which uses gravity-oriented surface segmentation to remove gravity-oriented surfaces;

FIG. 32 illustrates a gravity axis of a point cloud and a normal vector for a point on a gravity-oriented surface;

FIG. 33 illustrates portions of a point cloud that are related to a gravity-oriented surface;

FIG. 34 illustrates outliers to the gravity-oriented surface, which will be kept in the point cloud of after the gravity-oriented surface is removed;

FIG. 35 illustrates the point cloud with the first gravity-oriented surface removed;

FIG. 36 illustrates the point cloud after statistical outlier removal;

FIG. 37 is a block diagram of a color-based filtering process for removing noise delocalized from the gravity-oriented surface;

FIG. 38 illustrates the possible outliers in the point cloud that have a hue that is within a predetermined threshold of the mean hue of the gravity-oriented surface;

FIG. 39 illustrates the point cloud with the possible outliers shown in FIG. 33 removed, further removing noise associated with the gravity-oriented surface from the point cloud;

FIG. 40 illustrates an example of a point cloud in a bounding box with a delimiting sphere and a planar surface to be removed; and

FIG. 41 illustrates another example of a point cloud in a bounding box and a planar surface to be removed.

## DETAILED DESCRIPTION

Various implementations of the described technology will be described more fully hereinafter with reference to the accompanying drawings. The present technology may, however, be embodied in many different forms and should not be construed as limited to the implementations set forth herein. Rather, these implementations are provided so that the disclosure will be thorough and complete, and will fully convey the scope of the disclosed technology to those skilled in the art. In the drawings, the sizes and relative sizes of layers and regions may be exaggerated for clarity. Like numerals refer to like elements throughout.

It will be understood that, although the terms first, second, third etc. may be used herein to describe various elements, these elements should not be limited by these terms. These terms are used to distinguish one element from another. Thus, a first element discussed below could be termed a second element without departing from the teachings of the disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is only intended to describe particular implementations and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams, flowcharts, flow diagrams, state transition diagrams, pseudocode, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

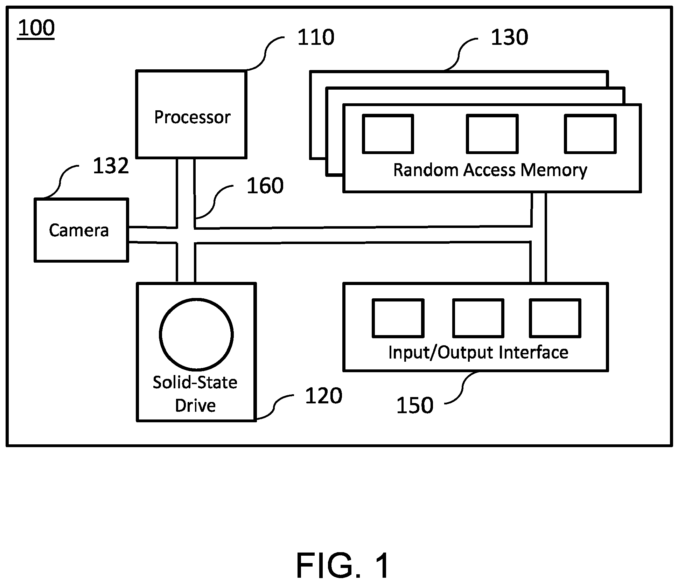

FIG. 1 illustrates a diagram of a computing environment 100 in accordance with an implementation of the present technology is shown. In some implementations, the computing environment 100 may be implemented by any of a conventional personal computer, a computer dedicated to operating generation of 3D representation of objects, a remote server and/or an electronic device (such as, but not limited to, a mobile device, a tablet device, a server, a controller unit, a control device, a monitoring device etc.) and/or any combination thereof appropriate to the relevant task at hand. In some implementations, the computing environment 100 comprises various hardware components including one or more single or multi-core processors collectively represented by a processor 110, a solid-state drive 120, a random access memory 130, a camera 132 and an input/output interface 150. The computing environment 100 may be a computer specifically designed for operating generation of 3D representation of objects. In some alternative implementations, the computing environment 100 may be a generic computer system.

In some implementations, the computing environment 100 may also be a subsystem of one of the above-listed systems. In some other implementations, the computing environment 100 may be an "off the shelf' generic computer system. In some implementations, the computing environment 100 may also be distributed among multiple systems. In some implementations, the computing environment 100 is virtualized in the "cloud" so that processing power and/or memory capacity may be scaled up or down depending on actual needs for executing implementations of the present technology. The computing environment 100 may also be specifically dedicated to the implementation of the present technology. As a person in the art of the present technology may appreciate, multiple variations as to how the computing environment 100 is implemented may be envisioned without departing from the scope of the present technology.

Communication between the various components of the computing environment 100 may be enabled by one or more internal and/or external buses 160 (e.g. a PCI bus, universal serial bus, IEEE 1394 "Firewire" bus, SCSI bus, Serial-ATA bus, ARINC bus, etc.), to which the various hardware components are electronically coupled.

The input/output interface 150 may allow enabling networking capabilities such as wire or wireless access. As an example, the input/output interface 150 may include a networking interface such as, but not limited to, a network port, a network socket, a network interface controller and the like. Multiple examples of how the networking interface may be implemented will become apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network, allowing communication among small groups of computers on the same local area network (LAN) and large-scale network communications through routable protocols, such as Internet Protocol (IP).

According to implementations of the present technology, the solid-state drive 120 stores program instructions suitable for being loaded into the random access memory 130 and executed by the processor 110 for executing generation of 3D representation of objects. For example, the program instructions may be part of a library or an application.

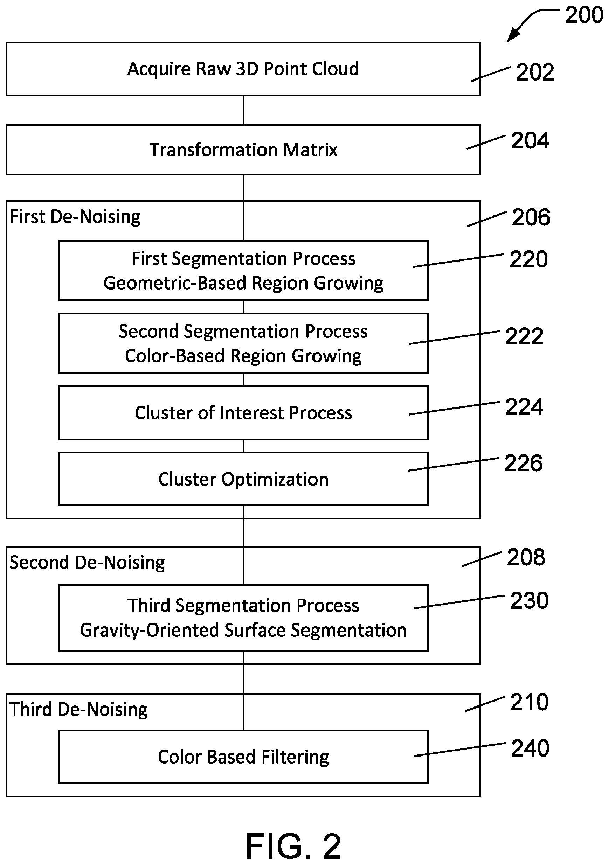

Referring to FIG. 2, an overview 200 of an implementation of the disclosed technology is described. It will be understood that this implementation may include code that is executed in a computing environment such as is shown in FIG. 1, and/or may include specialized circuitry.

At 202, a raw 3D point cloud is accessed. The point cloud may be acquired or may have been previously acquired and is accessed from a memory or storage device upon executing the de-noising method of the present technology. As used herein, a point cloud, or 3D point cloud reconstruction, may refer to a simple 3D representation of an object where the vertices are not necessarily connected to each other. If they are not connected to each other, the information contained in this kind of representation is the coordinates (*e.g.,* x, y, z in the case of a cartesian coordinate system) of each vertex, and its color (*e.g.,* components in the Red-Green-Blue color space). The 3D point cloud reconstruction may be the result of 3D scanning, and a common format for storing such point clouds is the Polygon File Format (PLY). Point cloud reconstructions are seldom used directly by users, as they typically do not provide a realistic representation of an object, but rather a set of 3D points without relations to each other aside from their positions and colors.

In some implementations, acquiring a 3D point cloud may involve using a plurality of depth maps, each depth map corresponding to an image within a stream of images acquired using, *e.g.,* the camera 132 as shown in FIG. 1. Generating each depth map may include executing a machine learning algorithm (MLA), which may include a deep learning algorithm (DLA), based on the image and a second image of the stream of images. In some implementations, generating each depth map may include utilizing depth information provided by one or more depth sensor(s) integrated within the imaging system. In some implementations, generating each depth map may include utilizing at least two images at the same position and coordinates, within the imaging system's coordinate system, using at least two lenses (*e.g.,* using a dual or triple lens Red-Green-Blue (RGB) imaging system).

In some implementations, a plurality of fragments of an obj ect's 3D point cloud can be generated based on depth map information. Each fragment may be a 3D point cloud generated based on at least one image, the corresponding depth maps of the at least one image, and the corresponding positions of the imaging system of the at least one image. These fragments can be merged to form a single 3D point cloud.

In some implementations, at 204, a transformation matrix is applied to images to improve the quality of the scaling and orientation. This process, which will be described in greater detail below, uses a ratio distribution method. In some implementations, similar processes may be applied on the full point cloud.

At 206, a first de-noising phase is applied. As will be described in depth below, the first de-noising phase includes a first segmentation process 220, which uses geometric-based region growing techniques to segment the point cloud into regions. A second segmentation process 222 uses color-based region growing to segment the point cloud into color-based regions. A cluster of interest process 224 merges regions into clusters and identifies clusters-of-interest. The first de-noising phase also includes a cluster optimization process 226 that uses statistical outlier filtering to obtain "optimized" data clusters.

At 208, a second de-noising phase is applied, including a third segmentation process 230, which uses planar surface segmentation to remove planar surfaces, such as a planar surface on which an object of interest is resting, from the point cloud. In some implementations, said planar surface is a gravity-oriented surface whose normal is parallel to a gravity-oriented axis.

At 210, a third de-noising phase is applied, including a color-based filtering process 240. In the third de-noising phase, color-based filtering is used to remove noise delocalized from planar surfaces.

It will be understood that although the various de-noising phases and processes described above may be used as parts of an integrated de-noising system, the de-noising phases and processes may also be used individually, in any combination with each other, or in combination with other technologies, either currently known or later developed. It will further be understood that although these phases and processes are shown in a particular order, and in some instances are given names including terms such as first, second, etc., the phases and processes may be used in other orders and combinations.

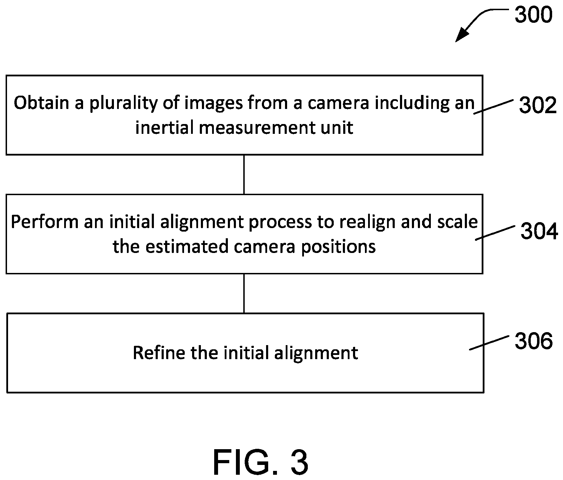

Referring now to FIG. 3, a block diagram 300 of the transformation matrix-based scale and orientation refinement process is described.

At block 302, a plurality of images ($a$ - $n$) are obtained from a camera including an inertial measurement unit. The plurality of images exists within a world coordinate system, based on the actual position and orientation of the camera during the capture. In some implementations, camera poses may be obtained from augmented reality processes based on (but not limited to) position / orientation sensors (*e.g.,* accelerometers, gyroscopes, and the like) and used in known augmented reality libraries such as (but not limited to) ARKit™ from APPLE™ or ARCore™ from GOOGLE™. From the plurality of images ($a$ - $n$), camera calibrations, intrinsic parameters and extrinsic parameters may be determined using known computer vision algorithms and techniques, such as known Structure-from-Motion (SfM) techniques. It should be noted that both world and estimated images of points $a$ and $b$ have the same indexing.

In some implementations, at block 304, an initial alignment process is performed to realign and scale the estimated camera positions of the image central camera positions in the world coordinate system (position and orientation) using a known RANdom Sampling Consensus (RANSAC) method.

At block 306, the initial alignment is refined. In some implementations, this may be done using a non-scaling iterative corresponding points (ICP) method. This is done by obtaining a plurality of world coordinate system image pairs, each such image pair including a defined first image ($a$) and a randomly selected second image ($d$). A distance is measured between the first image and the second image of the world coordinate system image pairs. Estimated position image pairs are obtained that correspond to the world coordinate system image pairs, and the distance is measured between the corresponding estimated image pairs, $a_x$ and $d_x$.

In some implementations, $m$ pairs are used per camera. The $m$ different pairs are randomly generated for each camera position in a world coordinate system. In some such implementations, $m$ can be based on the total number of obtained images $n$ minus 1 (to exclude the current image) - i.e., $m = (n*(n-1))/2$. In some other implementations, $m$ can be any value between 1 and $(n*(n-1))/2$. In some implementations, six pairs may be used per camera, and six different pairs may be randomly generated for each camera position in a world coordinate system.

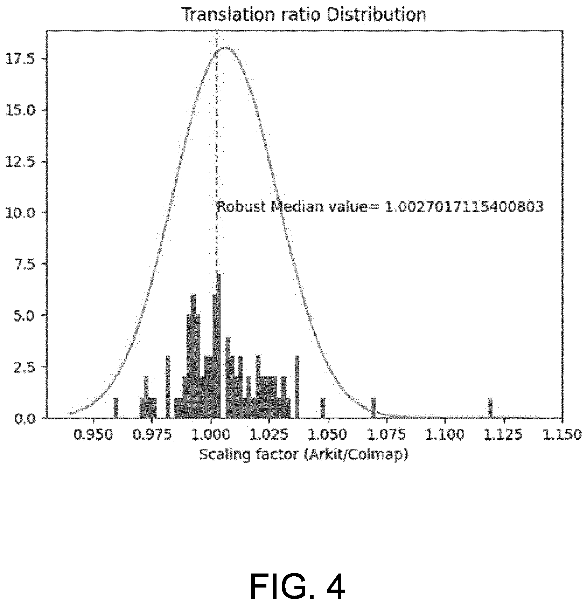

In some implementations, refining the initial alignment further involves obtaining a translation ratio distribution. This may be done by calculating the ratio between each world coordinate system pair distance and each estimated position pair distance - i.e., (world coordinate system distance)$_{a-d}$ / (estimated position distance)$_{ax-dx}$. Each mean of the distance ratio provides a point in the translation ratio distribution. FIG. 4 shows an example of such a translation ratio distribution, in which six pairs were used.

Refining the initial alignment may further involve obtaining the robust median value of the pair distance ratio distribution. An example of such a robust median value is shown for the translation ratio distribution shown in FIG. 4. In some implementations, this may involve performing a sigma-clipped statistical process at, *e.g.,* 3 sigma, so that outliers that are $\geq$ 3 sigma are removed. This robust median value will be the scaling factor.

Refining the initial alignment may further involve applying a robust median value scaling factor. It should be noted that a standard deviation > 0.1 may indicate that the world coordinate system positions and the estimated positions are very different, and the scale of the reconstruction has a high probability of error. Additionally, if more than 22% of the positions are considered outliers in the translation ratio distribution, then scaling issues are highly probable.

Refining the initial alignment may further involve performing a known iterative corresponding points (ICP) algorithm to refine the alignment between the world coordinate system image positions and the estimated positions < 3 sigma.

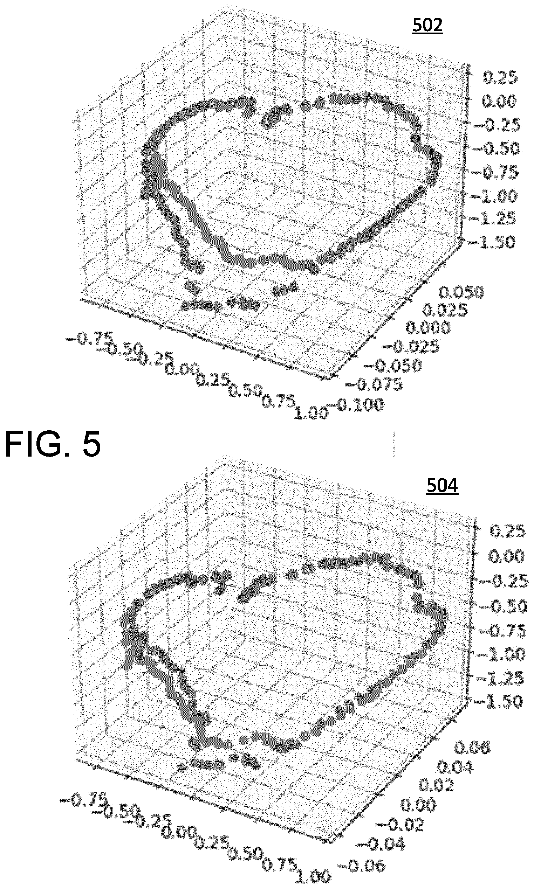

FIG. 5 shows an example of an alignment 502 between world coordinate system image positions and estimated positions before application of an ICP algorithm, and an alignment 504 between world coordinate system image positions and estimated positions after application of the ICP algorithm.

In some implementations, a scaling ICP method is used to refine the alignment between the world coordinate system indexed positions and the estimated indexed positions. In this method, the scale optimization operation is implicitly included within the process and the scaling factor will be obtained from the result of the process, providing the scaling factor that was applied for the alignment between corresponding points.

According to a full trajectory process in the scaling ICP method, the scaling ICP method aligns the world and estimated trajectory curves. This is an application of known ICP algorithms, and involves aligning two similar elements in 2D or 3D.

According to a single indexed pairs process in the scaling ICP method, a scaling ICP technique is applied on single pairs of same indexed cameras. In some implementations, the scaling ICP technique, applicable to two sets of one point, is applied to each corresponding pair of cameras, i.e. camera index $i_p$ from camera poses with corresponding camera $i_e$ from estimated cameras.

The scaling ICP method according to the described technology combines the full trajectory process as discussed above with the single indexed pairs process as discussed above.

In some embodiments, one or both of the non-scaling and scaling ICP methods discussed above are employed. Results can be combined in different ways to obtain the scaling factor, including, *e.g.,* considering the mean, the average, and/or the lowest or the highest values / scaling factors given through each approach.

Next, the first de-noising phase is described in greater detail, starting with the first segmentation process 220, based on geometric-based region growing. To better illustrate geometric-based region growing, several terms are defined with respect to this process.

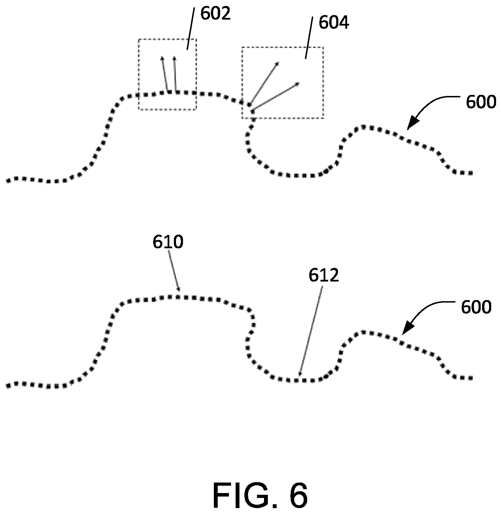

As used herein, a seed point is an initial reference point from which to begin a process. In the case of region growing segmentation, the seed point may be a point where a curvature is below a predetermined threshold (curvature is inverse of the curvature radius). In other words, seed points will generally belong to a flat area. This is illustrated in FIG. 6. As shown in FIG. 6, the region 602 of the point cloud 600 (shown here as a 2D representation for ease of understanding) has a low curvature, while the region 604 has a high curvature. Points, such as the points 610 and 612, at which the curvature is low may be used as seed points.

As used herein an initial seed point is the reference point from which to begin the initial region growing process. In the case of region growing segmentation, the initial seed point will be the point with minimum curvature.

As used herein, a neighbor of a reference point is a point that is closer in distance to the reference point than a predetermined threshold. In some implementations, this threshold depends on the resolution of the point cloud, e.g. 5 times the resolution. In some implementations, neighbors may also be defined as the closest points to the reference point, and the number of neighbors (see neighborhood below) is set to a specific number, which may be, for example, a fraction of the total points in the point cloud, e.g. 1/1000 of the total points in the point cloud.

As used herein, the neighborhood of a reference point is a set of all the neighbors of the reference point that are within a predetermined distance threshold of a defined point, or where the number of neighbors is set to a predetermined number. This predetermined number can be defined as a fraction of the total points in the point cloud. In some implementations, this number can be defined by the average number of neighbors of each point in the point cloud according to a distance threshold.

As used herein, a geometrical region defined by a reference point is a set of points for which the angle between the normal vector of a point and the normal vector of the reference point is smaller than a predetermined threshold. In the discussion of the first segmentation process 220, a "region" will generally refer to a geometrical region, unless otherwise specified.

As used herein, an unlabeled point is a point that is not assigned or labeled to a region.

As used herein, a proximate region distance between two regions is defined by the smallest distance between a point in the first region and a point in the second region. In some implementations, regions may be considered neighbors if this distance is below a predetermined threshold.

As used herein, a small region threshold is a predetermined number of points below which a region is considered to be a "small" region. In some implementations, the predetermined number of points may be defined in relation to the total number of points in the point cloud. For example, in some implementations, the predetermined number of points may be 1/1000 of the total number of points in the point cloud.

As used herein, a too small region threshold is a predetermined number of points below which a region is considered to be "too small," and may be removed from the process. In some implementations, the predetermined number of points may be defined in relation to the total number of points in the point cloud. For example, in some implementations, the predetermined number of points may be 1/10000 of the total number of points in the point cloud.

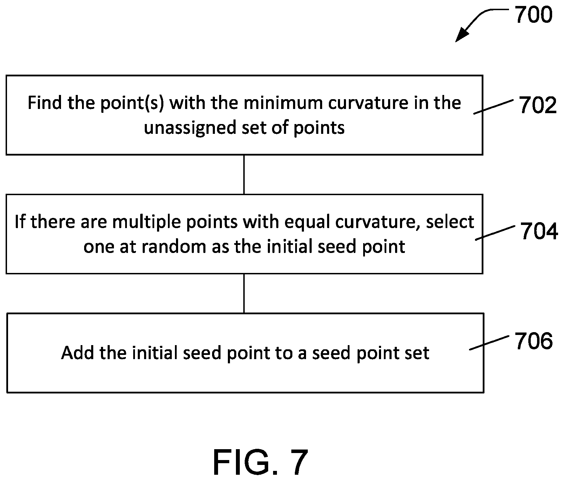

Having defined these terms, the first segmentation process 220, based on geometric-based region growing, is illustrated as block diagrams in FIGS. 7, 9, and 14. FIG. 7 shows a block diagram of a first portion 700 of geometric-based region growing in a point cloud, in which initial seed points are defined.

At block 702, the system finds the point in an unassigned set of points with the minimum curvature below the predefined threshold specified to define a seed point. At block 704, if there are multiple points with equal curvature, one is selected at random as the initial seed point. At 706, this point is added to a seed point set.

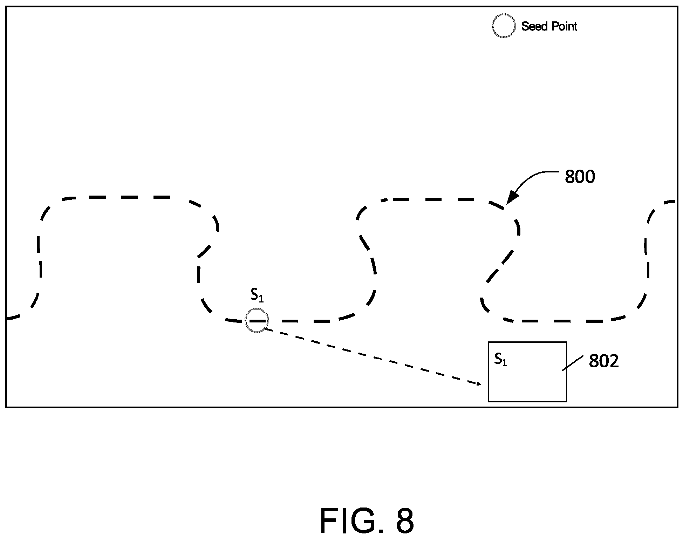

This process is further illustrated in FIG. 8, which shows a portion of a point cloud 800 (shown in 2D for ease of understanding), in which numerous of the points (shown as short segments) have equally low curvature (i.e., numerous belong to "flat" portions of the point cloud 800). Accordingly, one of these points, labeled $S_1$ has been randomly selected as the initial seed point, and added to the seed point set 802.

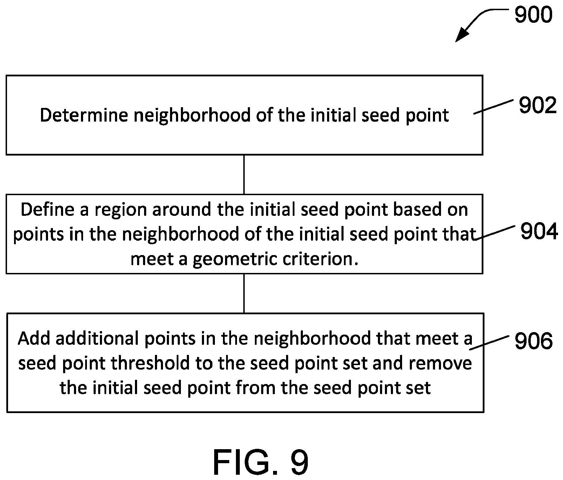

FIG. 9 shows a block diagram 900 of a second portion of the first segmentation process 220, continuing the geometric-based region growing of FIG. 7 with initial region growing. Continuing from the block diagram of FIG. 7, the block diagram of FIG. 9 starts after an initial seed point has been identified.

At block 902, a neighborhood of the seed point is determined by finding the neighbor points for the initial seed point. This may be done in some implementations by finding all points that are within a predetermined distance threshold of the seed point. In some implementations, this may be done by finding a predetermined number of "closest" points to the seed point. This predetermined number may be determined, for example, as a fraction of total number of points in the point cloud (*e.g.,* 1/1000 of the points). In some implementations, this number can be defined by the average number of neighbors of each point cloud according to a distance threshold. A neighborhood is defined as the set of neighbor points to the seed point.

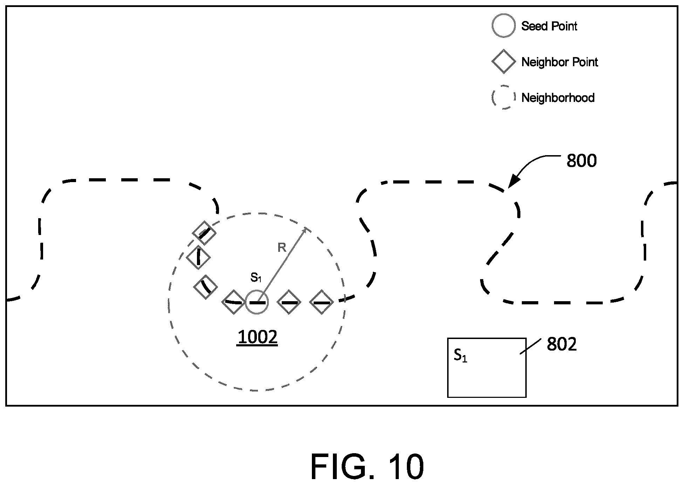

This is further illustrated in FIG. 10, which continues the illustration of FIG. 8. In FIG. 10, a neighborhood 1002 of the seed point $S_1$ is shown. In some implementations, the neighborhood 1002 can be defined by the set of neighbor points that are within a predetermined distance $R$ of the seed point $S_1$. In some implementations, the neighborhood 1002 can be defined as a predetermined number of neighbor points closest to the seed point $S_1$ - in this example, the nearest six points (or the nearest seven points if $S_1$ is itself considered to be a "neighbor" point).

Referring back to FIG. 9, in block 904, a region is defined around the seed point. In some implementations, the region may include the set of points from the neighborhood where the angle between the normal vector for a point in the neighborhood and the normal vector of the seed point is below a predetermined threshold. All the points in the neighborhood that meet this condition are assigned (or labeled) to the region.

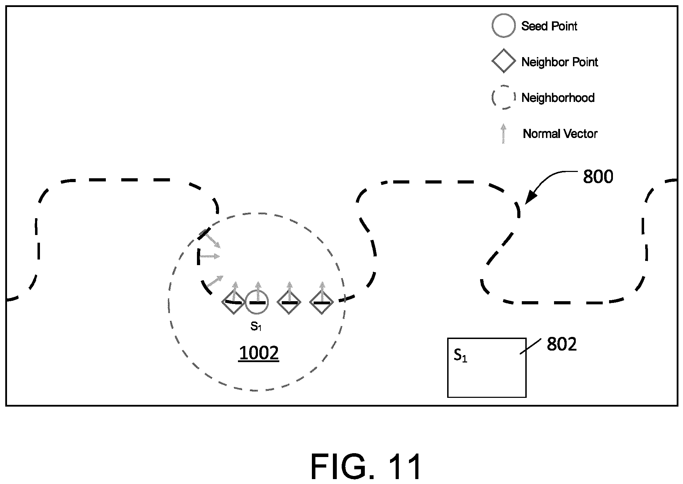

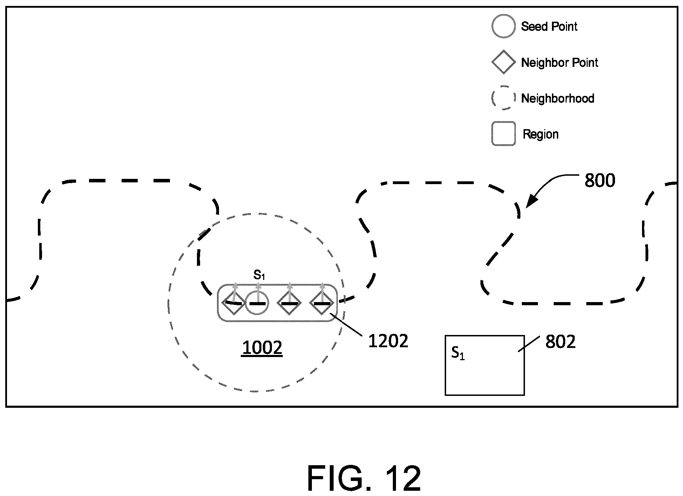

This is illustrated in FIGS. 11 and 12, which continue the illustration of FIG. 10. In FIG. 11, a normal vector for each of the points in the neighborhood 1002 is shown. FIG. 12 shows a region 1202 that includes only those points from the neighborhood 1002 that have an angle between the normal vector of the point in the neighborhood and the normal vector of the seed point that is below a threshold.

Referring again back to FIG. 9, at block 906, additional points in the neighborhood that meet the seed point threshold (i.e., curvature below a predetermined threshold) are added to the seed point set, and the initial seed point is removed from the seed point set. After this block, a point can have a status of: 1. Belongs to the region (i.e., the point is "assigned") and is a seed point; 2. Belongs to the region (i.e., is assigned) and is not a seed point; 3. Does not belong to the region (i.e., the point is "unassigned") and is a seed point; or 4. Does not belong to the region (i.e., is unassigned) and is not a seed point.

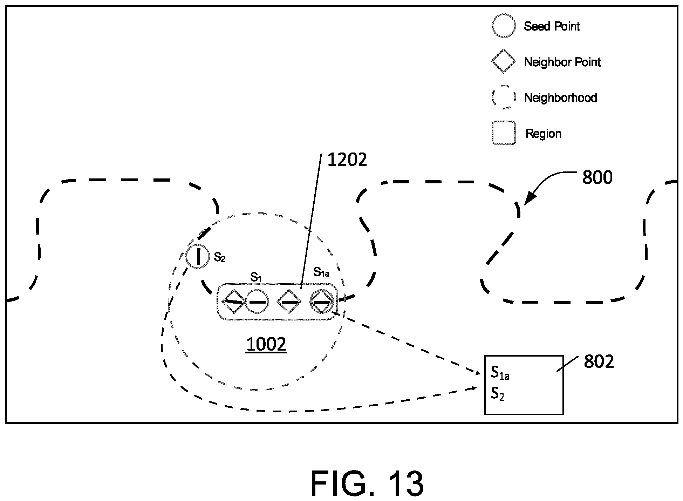

This is illustrated in FIG. 13, which continues the illustration of FIG. 12. In FIG. 13, two additional points in the neighborhood 1002 have been identified as meeting the seed point threshold. The first of these, labeled $S_{1a}$, is in the region 1202, while the second point, labeled $S_2$ is in the neighborhood 1002, but not in the region 1202. As can be seen, the points $S_{1a}$ and $S_2$ have been added to the seed point set 802, and the point $S_1$ has been removed from the seed point set 802.

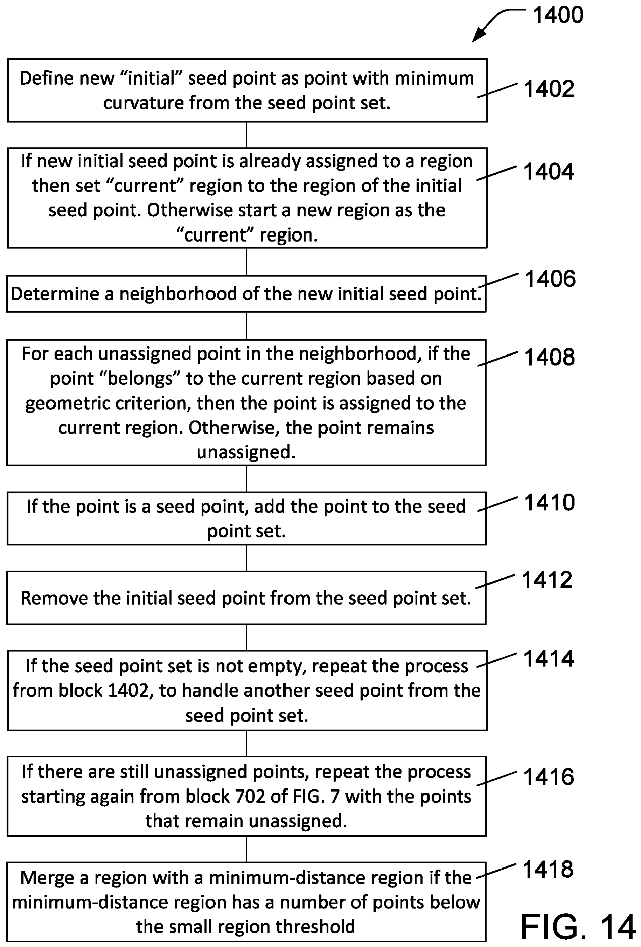

FIG. 14 shows a block diagram 1400 of a third portion of the first segmentation process 220, continuing the geometric-based region growing of FIGS. 7 and 9 with additional region growing. The additional region growing of the block diagram 1400 starts after the initial region growing of FIG. 9, and uses the seed point set that was defined in the initial region growing of FIG. 9. The additional region growing of the block diagram 1400 is repeated until the seed point set is empty.

At block 1402, the seed point with the minimum curvature (or maximum curvature radius) in the seed point set is defined as the "initial" seed point. If there are multiple points in the seed point set with equal curvature, one may be selected at random as the initial seed point.

At block 1404, if this initial seed point is already assigned to a region, then the "current" region is set to the region of the initial seed point, and that region may grow. Otherwise (i.e., the initial seed point is not already assigned to a region), then a new region may be created, and the "current" region is set to the new region.

At block 1406, a neighborhood of the initial seed point is defined. As before, this involves finding the neighbor points for the initial seed point, which may be done in some implementations by finding all points that are within a predetermined distance threshold of the initial seed point. In some implementations, this may be done by finding a predetermined number of "closest" points to the seed point. This predetermined number may be determined, for example, as a fraction of total number of points in the point cloud (*e.g.,* 1/1000 of the points). In some implementations, this number can be defined by the average number of neighbors of each point cloud according to a distance threshold. A neighborhood is defined as the set of neighbor points to the seed point.

At block 1408, for each unassigned point in the neighborhood, if the point "belongs" to the current region, then the point is assigned to the current region. Otherwise, the point remains unassigned. As before, the point belongs to the current region if the angle between the normal vector for the point and the normal vector of the seed point is below a predetermined threshold.

At block 1410, if the point is a seed point (i.e., the curvature at the point is less than a predetermined threshold), then the point is added to the seed point set.

At block 1412, the initial seed point is removed from the seed point set.

At block 1414, if the seed point set is not empty, then the process is repeated from block 1402, to handle another seed point from the seed point set.

At block 1416, if the seed point set is empty, but there are still unassigned points, then the process may start again from the beginning (i.e., block 702 of FIG. 7) with the points that are still unassigned. In some implementations, if this point is reached again with no change to the unassigned points, then the process may simply continue. In some implementations, prior to starting again with the unassigned points, the threshold for defining a seed point may be incrementally adjusted, so that more of the unassigned points may be added to the seed point set.

In some implementations, the process includes a block 1418, which may merge a region with a minimum-distance region if the minimum-distance region has a number of points below the small region threshold. This effectively eliminates the consideration of "small" regions. In some implementations, regions may be removed from the point cloud if they contain a number of points below the "too small region threshold" (e.g., 1/10000 of the points in point cloud).

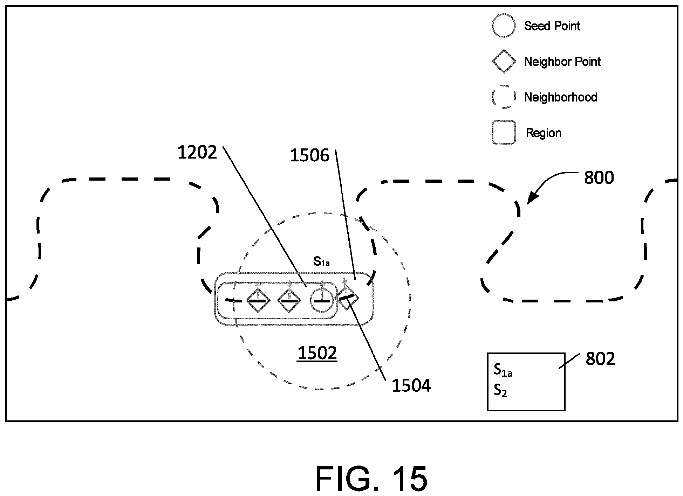

FIGS. 15-17 illustrate the process shown in FIG. 14, continuing the illustration of FIG. 13. In FIG. 15, the seed point $S_{1a}$ has been selected as the "initial" seed point. Because the seed point $S_{1a}$ is assigned to the region 1202, so the region 1202 will be set as the "current" region, and may be expanded to include neighbor points to the seed point $S_{1a}$ that meet the criterion for being included in a region, based on the angle between the normal vector of the point and the normal vector of the seed point $S_{1a}$. The points in the neighborhood 1502 of the seed point $S_{1a}$ that meet this criterion are shown with normal vectors in FIG 15. Of these, the neighbor point 1504 is not already assigned to the region 1202, so the region 1202 will be expanded to include the neighbor point 1504. This is shown as the expanded region 1506.

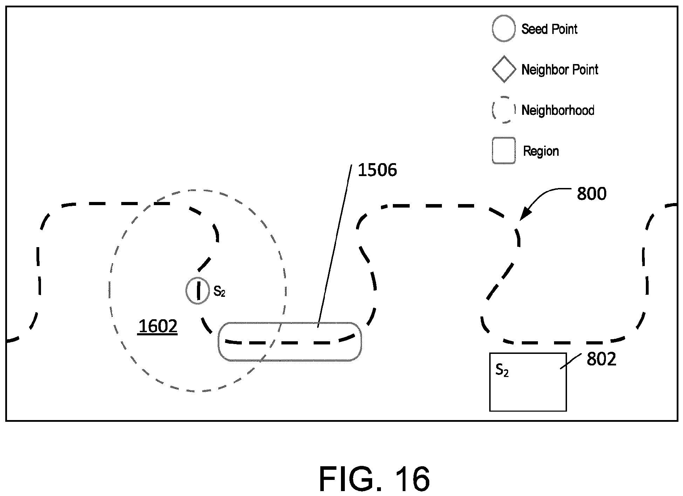

In FIG. 16, the point $S_{1a}$ has been removed from the seed point set 802, and the seed point $S_2$ has been selected as the new "initial" seed point. Because the initial seed point $S_2$ is not already assigned to a region, a new region will be started, and will be set as the "current" region. FIG. 16 also shows the neighborhood 1602 of the seed point $S_2$, based on a predefined distance from the initial seed point $S_2$.

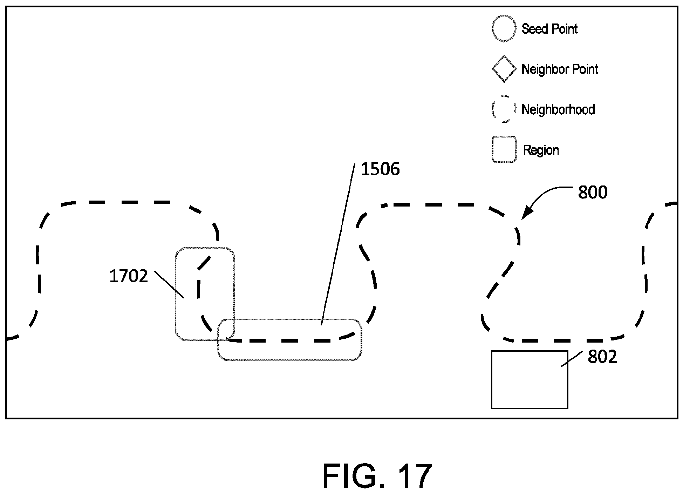

FIG. 17 shows the expanded region 1506, and a new region 1702. The expanded region 1506 includes five points, while the new region 1702 includes only three points. If the small region threshold is five points, then the expanded region 1506 has a size at or above the small region threshold, while the new region 1702 has a size that is below the small region threshold. In some implementations, this means that the expanded region 1506 and the new region 1702 may be merged into a single region (having eight points).

Next, the second segmentation process 222, using color-based region growing is described in greater detail. It should be noted that in some implementations, the second segmentation process 222 may be omitted. In other implementations, the first segmentation process 220 may be omitted. In some implementations, both the first segmentation process 220 and the second segmentation process 222 may be used. It should be further noted that "first" and "second" are used here only for convenience of referring to the segmentation processes, and do not imply an order in which the processes are applied.

The second segmentation process 222 is similar to the first segmentation process 220 but uses color distance rather than angle between normal vectors to determine which points in a neighborhood belong to a region. To determine color distances, the input point cloud include color information for each point in the point cloud. In some implementations, this color information may be defined in a Red-Green-Blue (RGB) color space. In some implementations, the color information may be defined in a Hue-Saturation-Value (HSV) color space, or in any other color space known by those of ordinary skill in the art. Conversion of color coordinates of the points between color spaces may be performed using known techniques. Because there may be at least approximate mappings between different color spaces, in some implementations, it is not necessary for all the points in the point cloud to include color information defined in the same color space.

While most of the terms defined above with respect to the first segmentation process 220 keep the same meaning in the second segmentation process, there are some additional terms defined here.

As used herein, the color distance between two points depends on the color space that is used in the implementation. For example, for implementations using the RGB color space, the color distance may be determined as a Euclidian distance between the colors. For a first point having a color $(R_1, G_1, B_1)$ and a second point having a color $(R_2, G_2, B_2)$, this can be calculated as:

$$\sqrt{(R_2 - R_1)^2 + (G_2 - G_1)^2 + (B_2 - B_1)^2}$$

. If another color space is used, the color distance can be defined according to known distance measures in that color space.

As used herein, a color-based region is a set of points where the color distance to a defined point (e.g., a seed point) is below a predetermined threshold. In the following discussion of the second segmentation process 222, a "region" will generally refer to a color-based region.

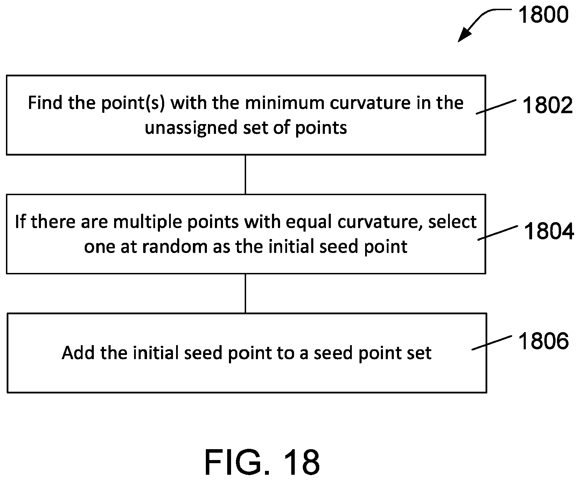

Having defined these terms, the second segmentation process 222, based on color-based region growing, is illustrated in block diagrams in FIGS. 18-20. FIG. 18 shows a block diagram of a first portion 1800 of color-based region growing in a point cloud, in which initial seed points are defined.

At block 1802, the system finds the point in an unassigned set of points with the minimum curvature below the predefined threshold specified to define a seed point. At block 1804, if there are multiple points with equal curvature, one is selected at random as the initial seed point. At block 1806, this point is added to a seed point set.

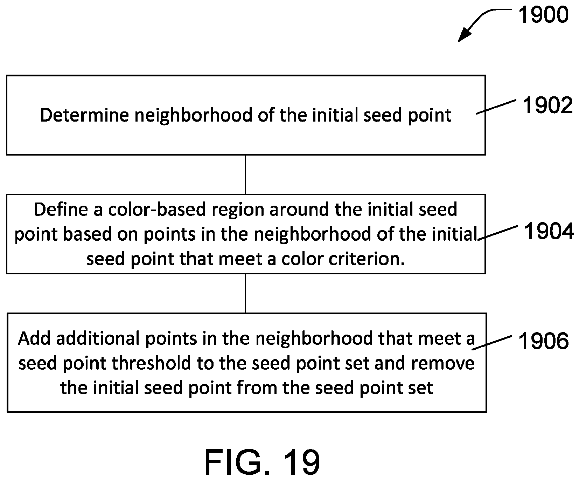

FIG. 19 shows a block diagram 1900 of a second portion of the second segmentation process 222, continuing the color-based region growing of FIG. 18 with initial region growing. Continuing from the block diagram of FIG. 18, the block diagram of FIG. 19 starts after an initial seed point has been identified.

At block 1902, a neighborhood of the seed point is determined by finding the neighbor points for the initial seed point. This may be done in some implementations by finding all points that are within a predetermined distance threshold of the seed point. In some implementations, this may be done by finding a predetermined number of "closest" points to the seed point. This predetermined number may be determined, for example, as a fraction of total number of points in the point cloud (*e.g.,* 1/1000 of the points). In some implementations, this number can be defined by the average number of neighbors of each point cloud according to a distance threshold. A neighborhood is defined as the set of neighbor points to the seed point.

In block 1904, a color-based region is defined around the seed point. In some implementations, the region may include the set of points from the neighborhood where the color distance from a point in the neighborhood and the seed point is below a predetermined threshold. All the points in the neighborhood that meet this condition are assigned (or labeled) to the region.

At block 1906, additional points in the neighborhood that meet the seed point threshold (i.e., curvature below a predetermined threshold) are added to the to the seed point set, and the initial seed point is removed from the seed point set.

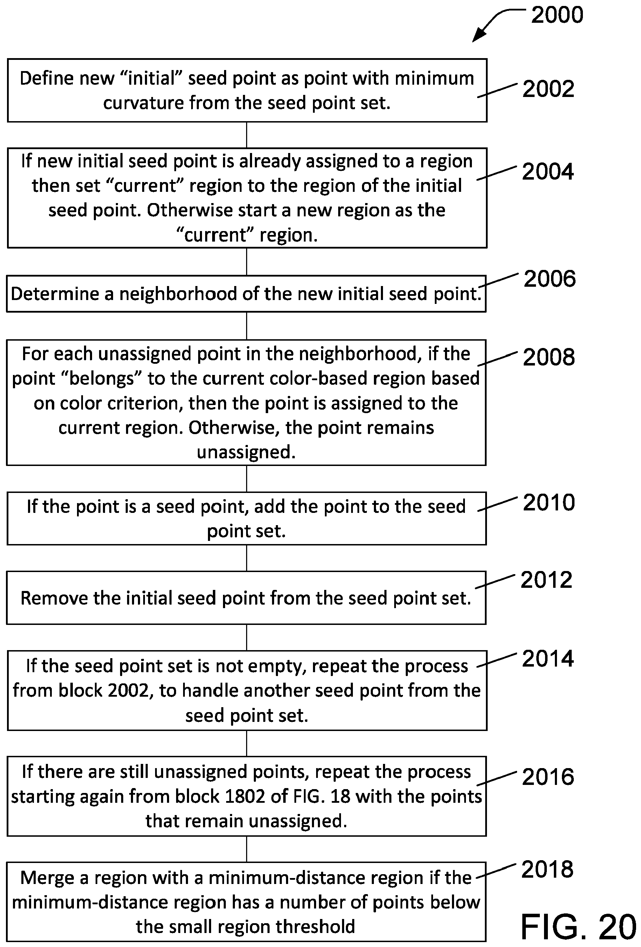

FIG. 20 shows a block diagram 2000 of a third portion of the second segmentation process 222, continuing the color-based region growing of FIGS. 18 and 19 with additional region growing. The additional region growing of the block diagram 2000 starts after the initial region growing of FIG. 19, and uses the seed point set that was defined in the initial region growing of FIG. 19. The additional region growing of the block diagram 2000 is repeated until the seed point set is empty.

At block 2002, the seed point with the minimum curvature (or maximum curvature radius) in the seed point set is defined as the "initial" seed point. If there are multiple points in the seed point set with equal curvature, one may be selected at random as the initial seed point.

At block 2004, if this initial seed point is already assigned to a region, then the "current" region is set to the region of the initial seed point, and that region may grow. Otherwise (i.e., the initial seed point is not already assigned to a region), a new region may be created, and the "current" region is set to the new region.

At block 2006, a neighborhood of the initial seed point is defined. As before, this involves finding the neighbor points for the initial seed point, which may be done in some implementations by finding all points that are within a predetermined distance threshold of the initial seed point. In some implementations, this may be done by finding a predetermined number of "closest" points to the seed point. This predetermined number may be determined, for example, as a fraction of total number of points in the point cloud (*e.g.,* 1/1000 of the points). In some implementations, this number can be defined by the average number of neighbors of each point cloud according to a distance threshold. A neighborhood is defined as the set of neighbor points to the seed point.

At block 2008, for each unassigned point in the neighborhood, if the point "belongs" to the current region, then the point is assigned to the current region. Otherwise, the point remains unassigned. As before, the point belongs to the current region if the color distance between the point and the seed point is below a predetermined threshold.

At block 2010, if the point is a seed point (i.e., the curvature at the point is less than a predetermined threshold), then the point is added to the seed point set.

At block 2012, the initial seed point is removed from the seed point set.

At block 2014, if the seed point set is not empty, then the process is repeated from block 2002, to handle another seed point from the seed point set.

At block 2016, if the seed point set is empty, but there are still unassigned points, then the process may start again from the beginning (i.e., block 1802 of FIG. 18) with the points that are still unassigned. In some implementations, if this point is reached again with no change to the unassigned points, then the process may simply continue. In some implementations, prior to starting again with the unassigned points, the threshold for defining a seed point may be incrementally adjusted, so that more of the unassigned points may be added to the seed point set.

In some implementations, the process includes a block 2018, which may merge a region with a minimum-distance region if the minimum-distance region has a number of points below the small region threshold. This effectively eliminates the consideration of "small" regions. In some implementations, regions may be removed from the point cloud if they contain a number of points below the "too small region threshold" (e.g., 1/10000 of the points in point cloud).

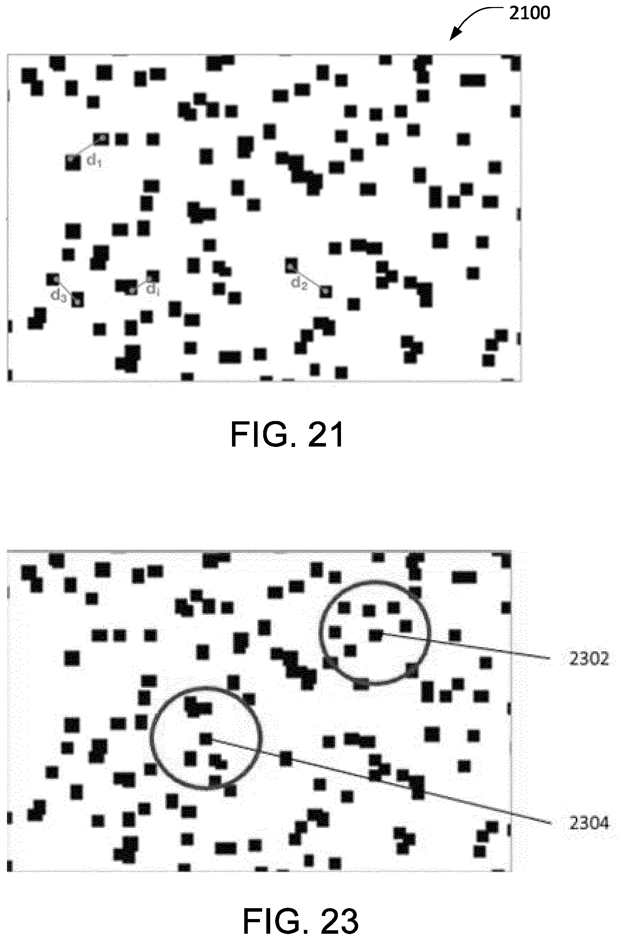

Once regions (either geometrical or color-based) have been defined, the regions may be merged into clusters, and clusters-of-interest may be identified. This is handled in the cluster of interest process 224, which is described in greater detail with reference to FIGS. 21-26.

Clusters-of-interest are generally those clusters that yield the highest values as calculated by:

$$\frac{number\ of\ points}{cluster\ mass\ center\ \times\ resolution}$$

The cluster mass center is referenced to the "world origin," which corresponds to a first camera position. In particular, the cluster mass center is the distance to the world origin. It should be noted that in some implementations, all processes are referenced to the world origin.

The point cloud resolution (or just "resolution") may be calculated by obtaining a closest neighbor distance for each point in the cloud, and calculating the average of the closest neighbor distances. The resolution is this closest neighbor distance average.

The closest neighbor distance is illustrated in FIG. 21. As can be seen in FIG. 21, closest neighbor distances d1, d2, d3, and d4 have been determined for four of the points in the point cloud 2100 (only a portion of which is shown, for purposes of clarity). To compute the resolution, such distances between the point and its closest neighbor would be determined for all points in the point cloud 2100, and the resolution of the point cloud 2100 would be the average of all of these closest neighbor distances.

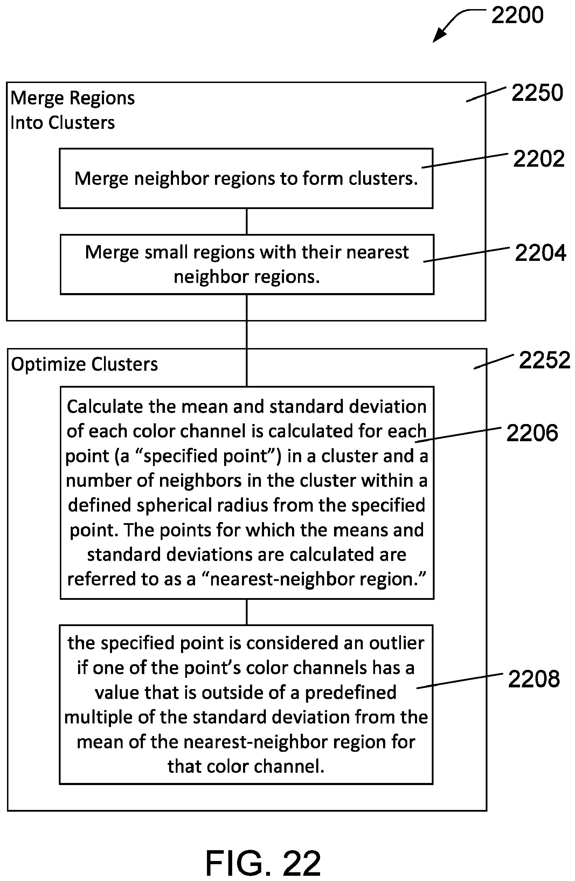

Referring now to FIG. 22, a block diagram 2200 of a process 2250 for merging regions into clusters and a process 2252 for optimizing clusters through statistical color outlier filtering are described. It will be understood that in some implementations, other processes could be used for optimizing clusters, and that the process 2252 for optimizing clusters that is shown in FIG. 22 requires color information on the points in the point cloud.

The process 2250 for merging regions into clusters includes blocks 2202 and 2204. At block 2202, neighbor regions are merged to form clusters. Neighbor regions are regions in which the distance between regions - i.e., the smallest distance between any two points, each point exclusive to one of the regions - is below a predetermined threshold (see the definition of "proximate region distance" above). Two regions may be merged if: (1) the difference between the average color of the first region and the average color of the second region is below a predetermined threshold; and (2) the two regions are neighbor regions.

At block 2204, in some implementations, any small regions (see above) may be merged with its nearest neighbor region. In some implementations, too small regions (see above) may be deleted from the point cloud.

The process 2252 for optimizing clusters through statistical color outlier filtering includes blocks 2206 and 2208. It should be noted that in the examples shown below, an RGB color space is used, but it will be understood that this is only for illustration. In some implementations, color outlier filtering may use an RGB color space. In some implementations, an HSV color space, or any other color space known to those of skill in the art may be used.

At block 2206, the mean and standard deviation of each color channel is calculated for each point (a "specified point") in a cluster and a number of neighbors in the cluster within a defined spherical radius from the specified point. The points for which the means and standard deviations are calculated are referred to as a "nearest neighbor region." In some implementations, the number of neighbors may be, for example, $4*K$ neighbors, where $K$ is the mean number of points inside the volume of a defined radius. In some implementations, this defined radius may be a multiple of the resolution, such as $5 *$ Resolution. This is illustrated in FIG. 23, which shows (as 2D circles, for clarity) the $5 *$ Resolution radius around a first point 2302 and a second point 2304, and $K$ would be calculated as the mean number of points within this radius.

Referring back to FIG. 22, at block 2208, the specified point is considered an outlier if one of the point's color channels has a value that is outside of a predefined multiple of the standard deviation from the mean of the nearest neighbor region for that color channel. For example, in some implementations, if the difference between the R, G or B color and the mean value of the nearest neighbor region of the specified point is greater than twice the standard deviation of the nearest neighbor region, the point is considered as an outlier. In some implementations, such outlier points may be removed as "noise."

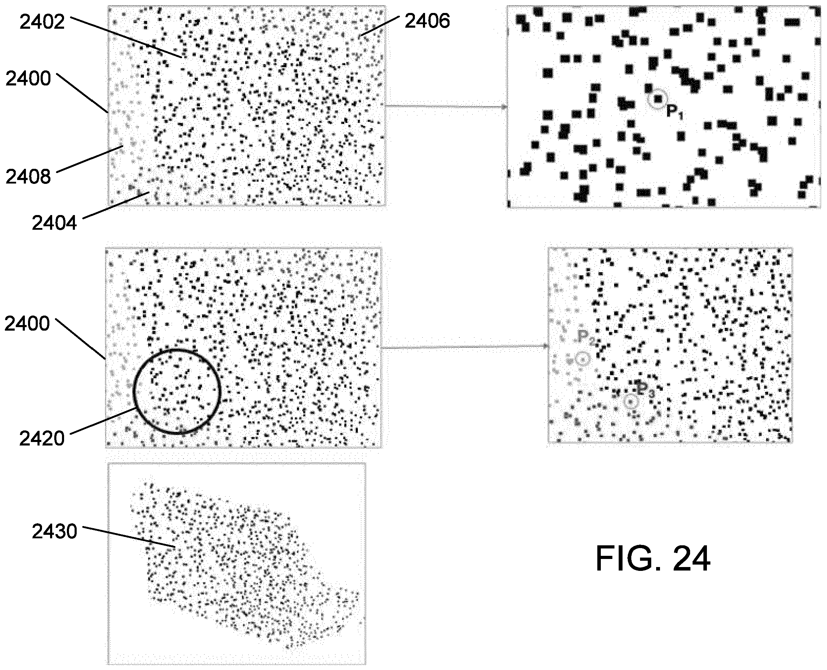

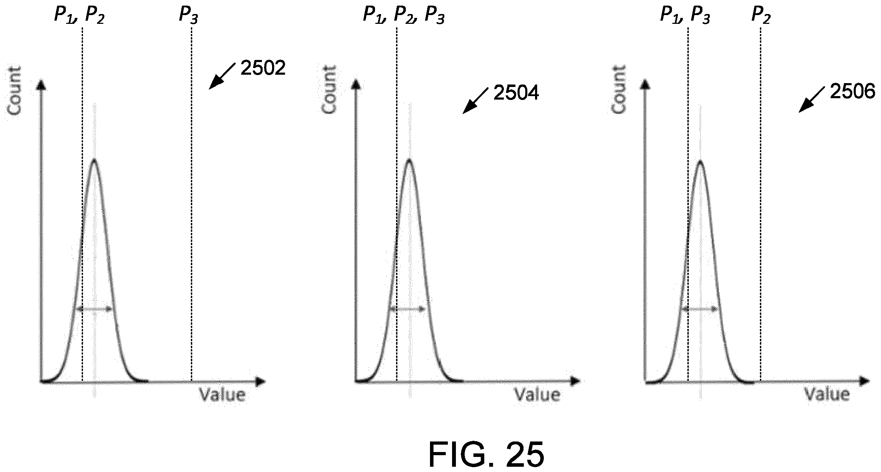

This is illustrated in FIGS. 24 and 25 for statistical outlier filtering to obtain optimized clusters. In FIG. 24, a neighborhood 2400 includes a predominately black cluster 2402, a predominately red cluster 2404, a predominately green cluster 2406, and a predominately blue cluster 2408. The black cluster 2402 is the "main" cluster. A point $P_1$ (shown, for clarity, in a scaled-up view of a portion of the neighborhood 2400), which is a black point in the black cluster 2402, is not at outlier, and will not be removed as noise. Another view of the neighborhood 2402 shows an example $4*K$ neighborhood 2420, as discussed above. Two additional points, $P_2$ and $P_3$ (shown, for clarity, in a scaled-up view of a portion of the neighborhood 2400) are outliers, as will be discussed below. Finally, FIG. 24 shows a denoised main cluster of interest 2430, following application of statistical color outlier filtering.

FIG. 25 shows color distributions of the neighborhood 2400, discussed above with reference to FIG. 24, including a red distribution 2502, a green distribution 2504, and a blue distribution 2506. The mean and two times the standard deviation are shown in each distribution, for reference. As shown, $P_1$ and $P_2$ have red values that are within two times the standard deviation of the mean in the red distribution 2502. All of $P_1$, $P_2$, and $P_3$ have green values that are within two times the standard deviation of the mean in the green distribution 2504. $P_1$ and $P_3$ have blue values that are within two times the standard deviation of the mean in the blue distribution 2506. Thus, only $P_1$ has all of its color components within two times the standard deviation of the mean for the various color distributions, so $P_1$ is not an outlier. By contrast, $P_2$ has a blue component that is outside of two times the standard deviation from the mean of the blue distribution 2506, and $P_3$ has a red component that is outside of two times the standard deviation from the mean of the red distribution 2502, so both $P_2$ and $P_3$ are deemed to be outliers.

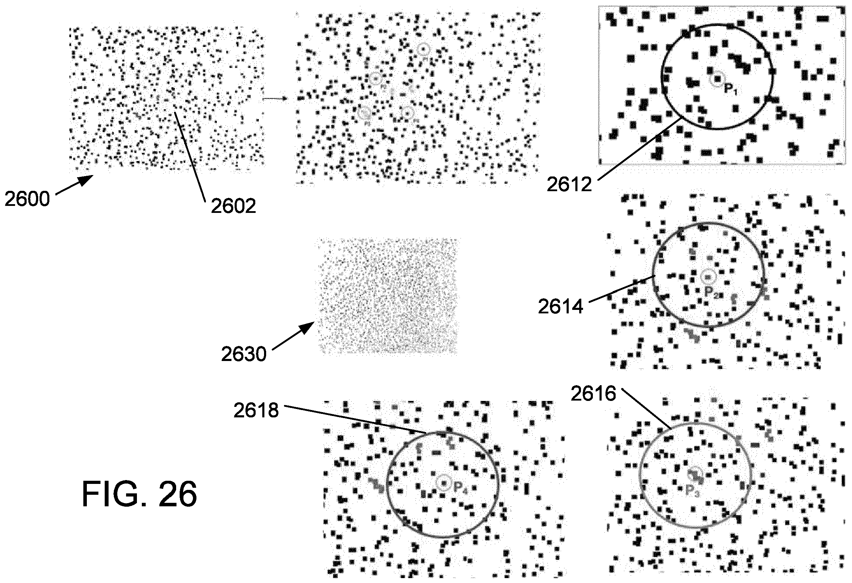

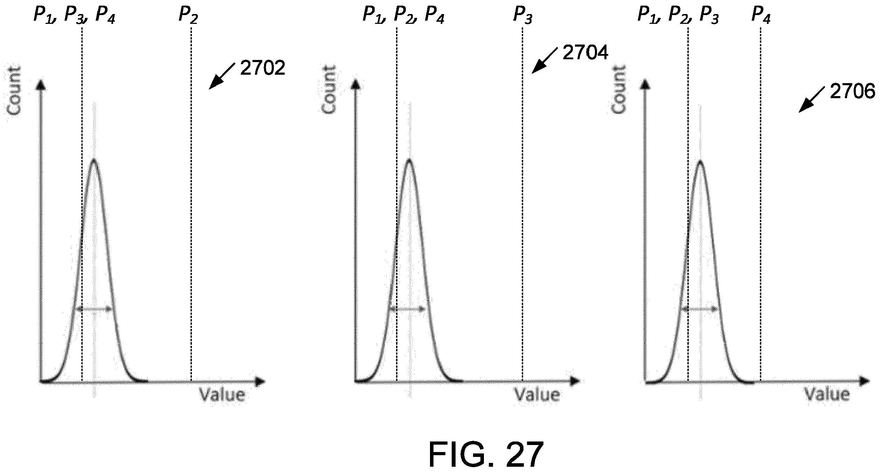

FIGS. 26 and 27 show the same procedure used for fine outlier filtering. In FIG. 26, a neighborhood 2600 includes a predominately black cluster 2602, which is the "main" cluster, but that includes noise having a variety of other colors. A point $P_1$ (shown, for clarity, in a scaled-up view of a portion of the neighborhood 2600), which has a $4*K$ neighborhood 2612, is a black point the black cluster 2602, and is not an outlier. A point $P_2$ (shown, for clarity, in a scaled-up view of a portion of the neighborhood 2600), which has a $4*K$ neighborhood 2614, is a red point in the black cluster 2602, and is an outlier. A point $P_3$ (shown, for clarity, in a scaled-up view of a portion of the neighborhood 2600), which has a $4*K$ neighborhood 2616, is a green point in the black cluster 2602, and is an outlier. A point $P_4$ (shown, for clarity, in a scaled-up view of a portion of the neighborhood 2600), which has a $4*K$ neighborhood 2618, is a blue point in the black cluster 2602, and is an outlier. Finally, FIG. 26 shows a denoised main cluster of interest 2630, following application of statistical color outlier filtering.

FIG. 27 shows color distributions of the neighborhood 2600, discussed above with reference to FIG. 26, including a red distribution 2702, a green distribution 2704, and a blue distribution 2706. The mean and two times the standard deviation are shown in each distribution, for reference. As shown, $P_1$, $P_3$, and $P_4$ have red values that are within two times the standard deviation of the mean in the red distribution 2702. $P_1$, $P_2$, and $P_4$ have green values that are within two times the standard deviation of the mean in the green distribution 2704. $P_1$, $P_2$, and $P_3$ have blue values that are within two times the standard deviation of the mean in the blue distribution 2706. Thus, only $P_1$ has all of its color components within two times the standard deviation of the mean for the various color distributions, so $P_1$ is not an outlier. By contrast, $P_2$ has a red component that is outside of two times the standard deviation from the mean of the red distribution 2702, $P_3$ has a green component that is outside of two times the standard deviation from the mean of the green distribution 2704, and $P_4$ has a blue component that is outside of two times the standard deviation from the mean of the blue distribution 2706, so $P_2$, $P_3$, and $P_4$ are deemed to be outliers.

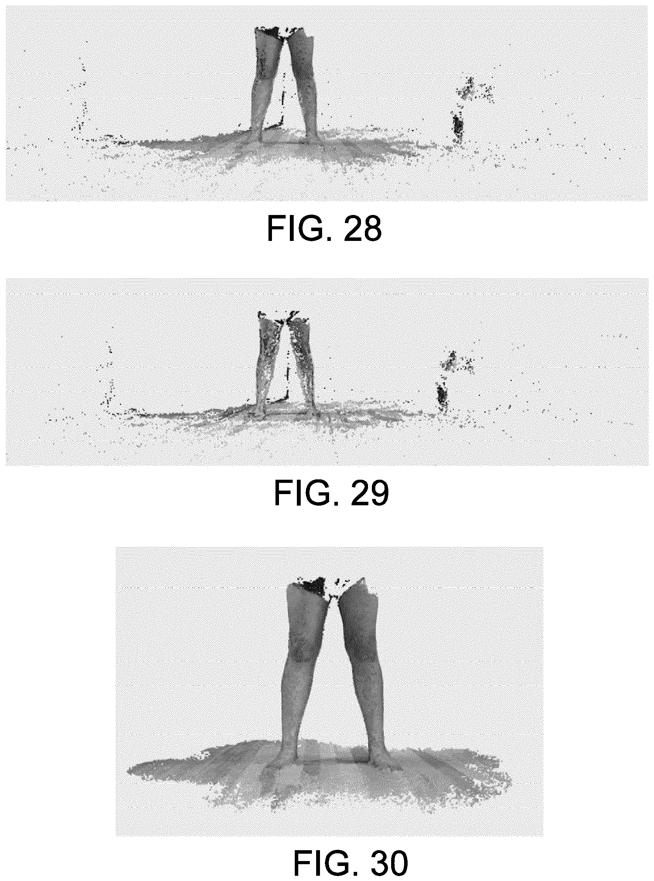

Before continuing to a detailed description of the second de-noising process, an example of the results of the first de-noising process may be useful. This example is shown in FIGS. 28-30.

FIG. 28 shows a "raw" point cloud with colors. The point cloud includes legs, a floor, and a considerable amount of noise, which may, *e.g.,* include points on surrounding walls, etc.

FIG. 29 shows color-based outliers, as determined using, *e.g.,* the de-noising processes described above. Removing these outliers results in the filtered point cloud shown in FIG. 30. As seen in FIG. 30, the filtered point cloud still includes legs and a portion of a floor. In the second de-noising process, planar surfaces, such as the floor, are removed. Such planar surfaces may, for example, be surfaces beneath or adjacent to an object, or surfaces on which an object is resting.

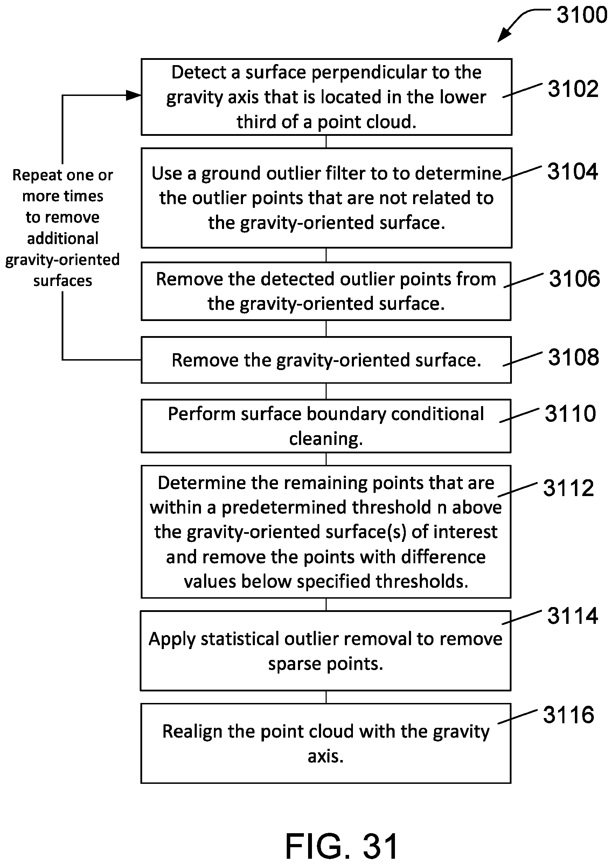

FIG. 31 shows a block diagram 3100 of the third segmentation process 230 of the second de-noising phase 210. The third segmentation process 230 involves both macro removal of a planar surface beneath/adjacent to an object or on which an object is resting, as well as fine de-noising, employing color filtering (by any color space know by the skilled person) to remove the points with similar color values and normal direction to the planar surface that has been removed. It will be understood by those of ordinary skill in the art that, although illustrative examples of application of the third segmentation process 230 of the second de-noising phase 210 is described as removing gravity-oriented surfaces, the same techniques could be used, *mutatis mutandis,* to remove planar surfaces oriented in other directions, perpendicular to a reference axis. The use of "gravity-oriented" surfaces, and a "gravity axis" are, therefore, merely for illustration.

At block 3102, a surface perpendicular to the gravity axis and that is located in the lower third of a point cloud is detected. The gravity axis is an axis that is oriented along the direction of gravity. In some implementations, the surface perpendicular to the gravity axis may be detected by finding points that have a normal vector that is within a predetermined threshold angle of the gravity axis. In some implementations, this threshold angle may be, *e.g.,* 0.5 radians.

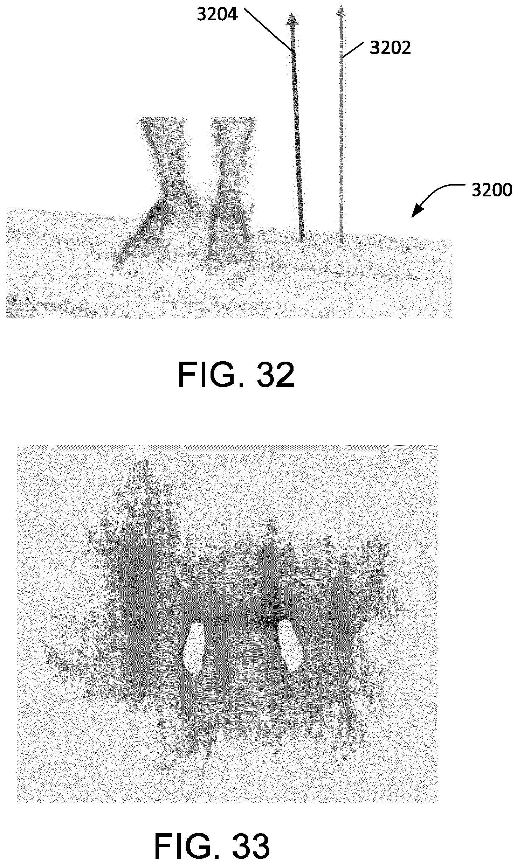

This is illustrated in FIG. 32, which shows a gravity axis 3202 of a point cloud 3200, and a normal vector 3204 for a point, which is within a threshold angle of the gravity axis 3202, indicating that the point may be on a surface perpendicular to the gravity axis. Again, the gravity axis is a mere example of a reference axis that is used for performing de-noising phases described herein. Any other reference axis may be used.

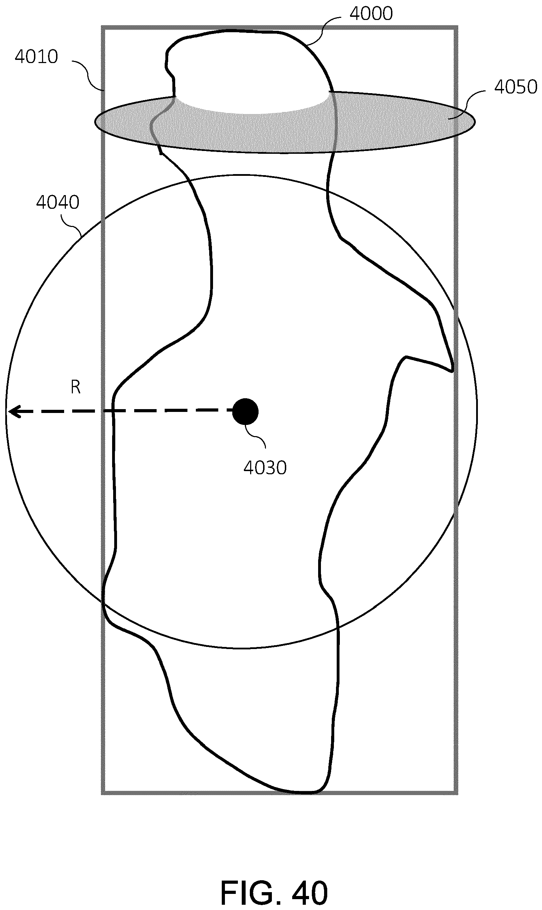

In a more general aspect and with reference to FIG. 40, there is described another process for locating planar surfaces to be removed according to some implementations of the present technology. More specifically, FIG. 40 shows a point cloud with a corresponding bounding box 4010. For clarity purposes, the point cloud is depicted as a shape 4000 corresponding to contours of the point cloud, the shape 4000 being a 3D shape surrounding all the points of the point cloud (e.g. a concave-hull of the point cloud). The bounding box 4010 may be generated by any known suitable computer vision algorithms and techniques. In this implementation, a mass center 4030 of the point cloud is determined based on coordinates of points thereof. A delimiting sphere 4040 centered on the mass center 4030 is further determined. In the illustrative example of FIG. 40, a radius of the delimiting sphere 4040 is 0.7 times a minimal dimension of the bounding box 4010 (e.g. a width thereof). Other ratios between the radius of the delimiting sphere 4040 and dimensions of the bounding box 4010 are contemplated in alternative embodiments. Planar surfaces may further be searched outside the delimiting sphere 4040 and in the bounding box 4010, instead of relying on a lower third of the bounding box. It can be said that the delimiting sphere 4040 defines a volume for searching the planar surfaces to be removed, said volume being defined on an exterior side of the delimiting sphere 4040.

For example, a planar surface 4050, which is a gravity-oriented surface in this example, intersect the bounding box 4010 and is on an exterior side of the delimiting sphere 4040. As such, the planar surface 4050 may be removed according to techniques disclosed herein. It can be said that, by determining the delimiting sphere 4040 from the mass center 4030, the planar surfaces to be removed are searched at or close to extremities of the point cloud.

Alternatively, the radius of the delimiting sphere is determined based on a maximal dimension (e.g. a height in the example of FIG. 40) of the bounding box 4010 or any other dimension thereof. For example, the radius of the delimiting sphere 4040 may be 0.4 times a maximal dimension of the bounding box 4010 (e.g. a height thereof).

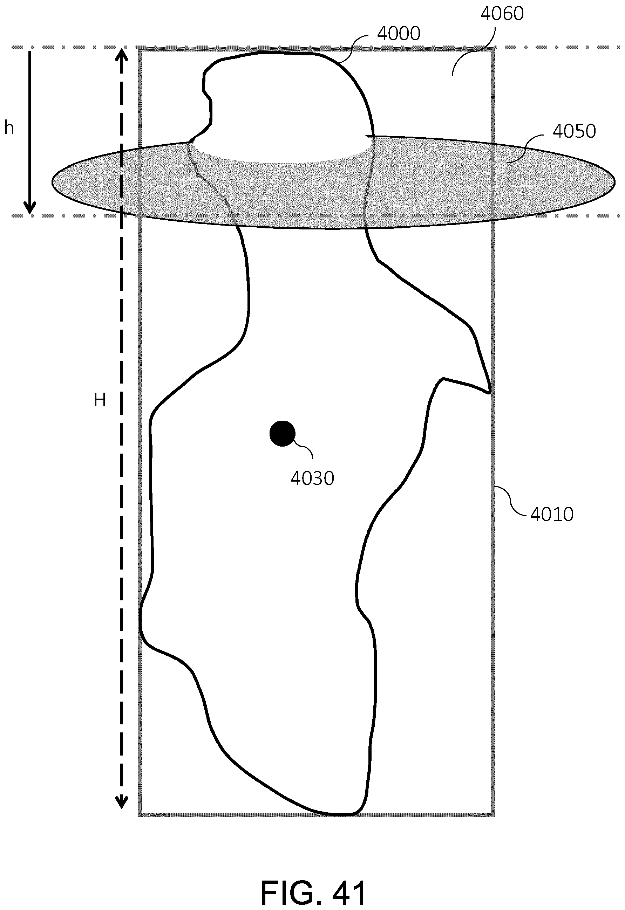

In some alternative embodiments and with reference to FIG 41, a search volume 4060 may be defined in the bounding box 4010. A higher dimension of the bounding box 4010 is determined. In the example of FIG. 41, said higher dimension is a height $H$ of the bounding box 4010. The search volume 4060 is defined at a first end of the bounding box 4010 along said higher dimension. A size $h$ of the search volume along said higher dimension is, in this implementation, 0.3 times the height $H$ such that $h = 0.3H$. Other ratio between the size $h$ and the size $H$ of the higher dimension are contemplated in alternative embodiments. Another search volume may be defined at another end of the bounding box along the higher dimension. The same process may be applied to other dimensions (e.g. second higher dimension) of the bounding box to defined other search volumes. In this implementation, planar surfaces to be removed are further searched in the search volume 4060.

For example, the planar surface 4050, which is a gravity-oriented surface in this example, is located within the search volume 4060. As such, the planar surface 4050 may be removed according to techniques disclosed herein. It can be said that, by determining the search volume 4060 at an end of the bounding box 4010 as described hereabove, the planar surfaces to be removed are searched at or close to extremities of the point cloud.

Referring back to FIG. 31, at block 3104, a ground outlier filter is employed on the detected gravity-oriented surface to determine the outlier points that are not related to the gravity-oriented surface. Points with normal vectors having an orientation that does not correspond to the surface normal orientation are considered to be outliers to the gravity-oriented surface. These detected outlier points may be inliers related to an object of interest, or they may be points within the ground-oriented surface with non-perpendicular normals, which will generally be removed by a statistical outlier removal process (see below).

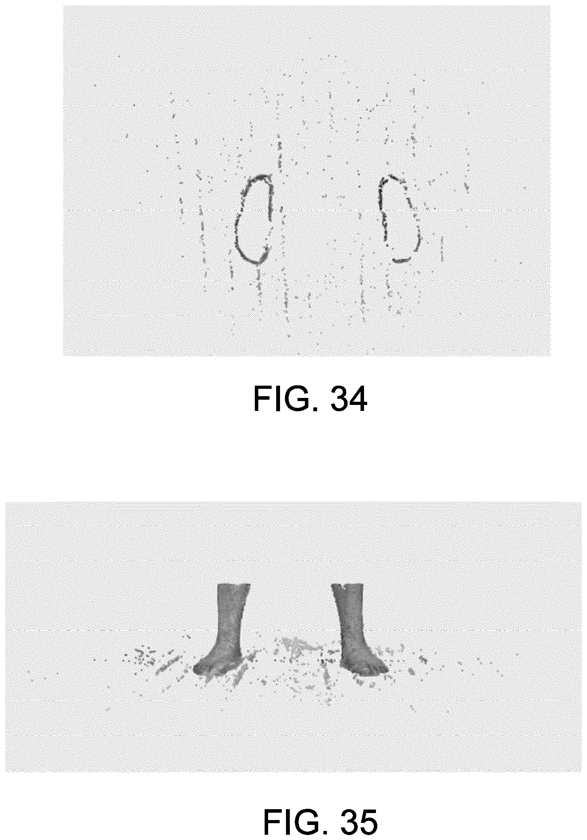

This is illustrated in FIGS. 33-34. In FIG. 33, the portions of the point cloud that are related to the gravity-oriented surface are shown, while FIG. 34 shows the outliers to the gravity-oriented surface, which will be kept in the point cloud after the gravity-oriented surface is removed.

Referring back to FIG. 31, at block 3106, the detected outlier points are removed from the detected gravity-oriented surface. At block 3108, the gravity-oriented surface is removed (i.e., points in the point cloud that have been determined above to be part of the gravity-oriented surface are removed).

This is shown in FIG. 35, which shows the point cloud with the first gravity-oriented surface removed. It will be noted that noise related to the outlier points remains in the point cloud.

Referring back to FIG. 31, in some implementations, the gravity-oriented surface of interest could be a combination of two (or more) surfaces. Accordingly, blocks 3102, 3104, 3106, and 3108 may be repeated one or more times to detect a second (or further) gravity-oriented surface in the same region with a similar orientation to the first detected gravity-oriented surface. Again, the gravity-oriented surfaces described here are only mere examples of planar surfaces that may be removed by the de-noising processes described herein. Any planar surface may be removed in a similar manner.

At block 3110, surface boundary conditional cleaning is performed. This may be done, *e.g.,* by identifying points that are located beneath the gravity-oriented surface(s) of interest, and removing them. In a more general aspect, the object of interest is located on a first side of each of the gravity-oriented surface(s) (i.e. facing a first side thereof), and performing the surface boundary conditional cleaning comprises removing points that are located on a second side of the gravity-oriented surface(s).

At block 3112, the remaining points that are within a predetermined threshold n above the gravity-oriented surface(s) of interest are identified. In implementations, this threshold $n$ may be related to the size of the 3D reconstruction and may be, *e.g.,* a specified percentage of a dimension of the bounding box, such as 1% of the height of the bounding box. In some implementations, the threshold n may be set to a constant value, such as 2 cm.

The colors and normals of points that are within the predetermined threshold n above the gravity-oriented surface(s) of interest are determined, and thresholds are used to determine if the points are part of the gravity-oriented surface(s) of interest. For example, in some implementations, the threshold for the normal may be 0.90 radians between the normal of the point and the mean normal of the gravity-oriented surface(s) of interest. In some implementations, the color threshold may be a value difference of 70 (assuming 8-bit color channels - so 70 out of a range of 0-255 for each color channel) between the R, G, and B color channels (assuming that an RGB color space is being used) and the mean color of the gravity-oriented surface of interest. It will be understood that other values could be used in various implementations, depending on the color space and the range of values for each color in the color space. In general, a goal is to avoid (to the extent possible) inadvertent removal of points on the object of interest.

Points with difference values that are below the specified thresholds are considered to be points remaining from the gravity-oriented surfaces. Accordingly, they may be removed.

At block 3114, statistical outlier removal is performed to remove sparse points that remain in the ground region. In some implementations, this may be done by finding isolated/sparse points in the lower one-third of the point cloud that was used to detect gravity-oriented surfaces of interest. These isolated or sparse points are referred to in this block as "outliers," and may be removed.

One way of finding such outliers is to find points that are sparser than a threshold. In some implementations, this threshold may be determined based on a predetermined factor $M$ and on the standard deviation of the $K$ closest neighbor distances between the points in the point cloud (where K is a predetermined integer). This standard deviation may be determined in some implementations by calculating the closest neighbor distance for each point in the point cloud and performing a statistical analysis to obtain the mean and standard deviation of the $K$ closest neighbor distances between the points. Outliers may be considered to be points that are more distant from their neighbors than $M$ standard deviations from the mean of the distribution of distances of the $K$ closest neighbors. Thus, the higher the value of $M$, the less aggressive the removal of outliers. In some implementations, the value of M may be 1. It should be noted that there is no relationship assumed between ground or the object in the statistical outlier removal.

While a particular process for statistical outlier removal is discussed above, it will be recognized that other methods for statistical outlier removal may be used.

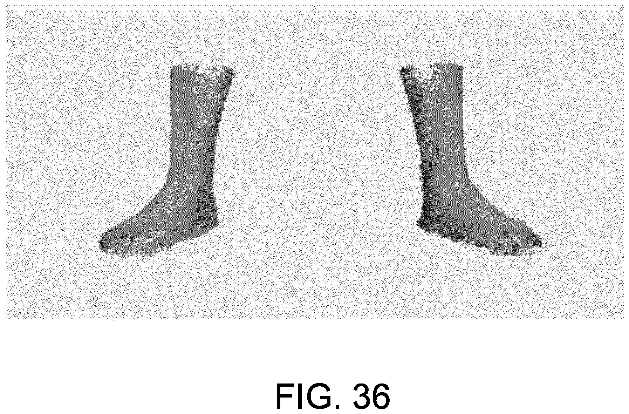

The results of this statistical outlier removal are shown in FIG. 36. More specifically, FIG. 36 shows the point cloud after statistical outlier removal as discussed above.

Referring back to FIG. 31, at block 3116, the point cloud is realigned with the gravity axis. The original orientation of the point cloud is known from the first detected gravity-oriented surface normal. The realignment of the point cloud may be performed using a transformation matrix defined by the original surface normal and the gravity axis.

Next, the third de-noising phase 210 is described in greater detail. The third de-noising phase 210 includes a color-based filtering process 240 that removes noise delocalized from the gravity-oriented surface.

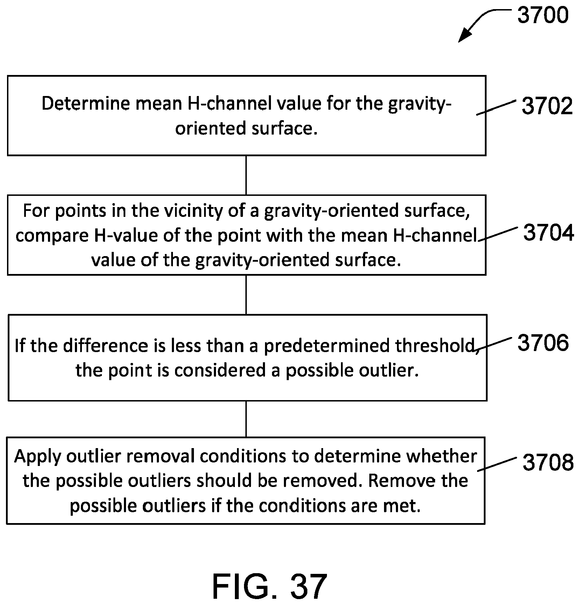

Referring to FIG. 37, a block diagram 3700 for a color-based filtering process for removing noise delocalized from the gravity-oriented surface is described. This process may be used, for example, in areas of strong curvature that are in the proximity of a gravity-oriented surface. While the process is described below for an HSV color space, it will be understood that an RGB color space, or any other color space known in the art could be used. The developers of the present technology have realized that, in this implementation, the use of the HSV color space may provide benefits for removing delocalized noise. Indeed, in the HSV color space, color information is comprised in one channel whereas the same information is distributed in the three channels of the RGB color space. As a result, use of the HSV color space may provide faster computation time and higher precision for removing delocalized noise.

It should also be noted that the developers of the present technology have realized that, in this implementation, the use of the RGB color space may provide benefits for removing localized noise. As such, conversion of the information from the HSV color space to the RGB color space, or from the RGB color space to the HSV color space, may be performed between subsequent operations of any method or process described herein.

At block 3702 the mean H-channel (hue channel) value of the gravity-oriented surface is determined. At block 3704, for points in the vicinity of a gravity-oriented surface, the H-value of the point is compared with the mean H-channel value of the gravity-oriented surface.

At block 3706, if the difference is less than a predetermined threshold, the point is considered a possible outlier to the point cloud (i.e., if its hue is close to the mean hue of the gravity-oriented surface, then the point may actually be part of the gravity-oriented surface, rather than an object of interest in the point cloud). In some implementations, in which the H-channel is 8-bits (i.e., it has a value of 0-255), the threshold may be 5.

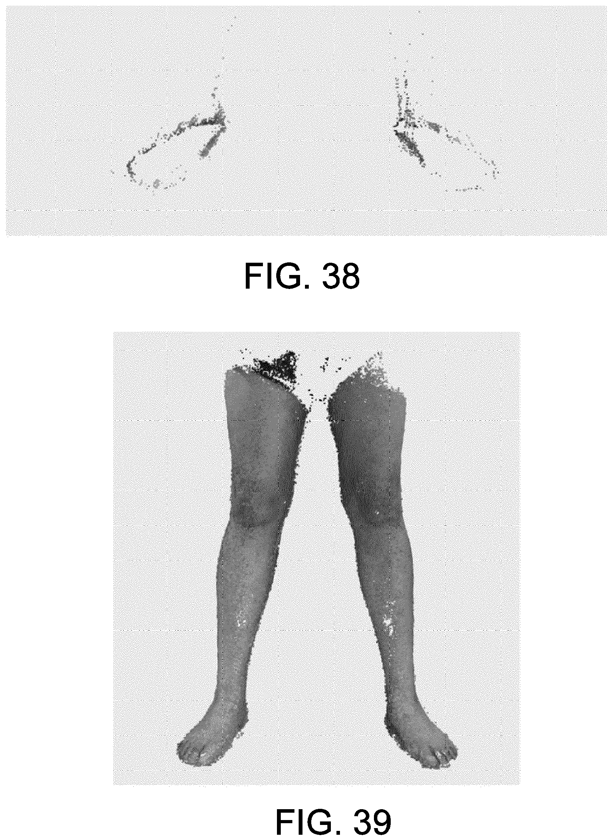

This is illustrated in FIG. 38, which shows the possible outliers in the point cloud that have a hue that is within a predetermined threshold of the mean hue of the gravity-oriented surface.

Referring back to FIG. 37, at block 3708, outlier removal conditions are applied to determine whether the possible outliers should be removed, and the possible outliers are removed if the conditions are met. In some implementations, there may be multiple outlier removal conditions. For example, in some implementations, according to a first condition, the color-based filtering is not applied (i.e., the possible outliers are not removed) if the number of points that are considered possible outliers in a specified region of the point cloud exceeds a predetermined threshold. For example, in some implementations, if more than 5% of the points in a defined region (such as a rectangle region centered in the middle of the point cloud) of a defined size (*e.g.,* 30 cm in height, in the case of a human body) are considered possible outliers, then the color-based filtering is not applied. According to a second condition, the color-based filtering is not applied if the number of points that are considered possible outliers in the entire point cloud exceeds a predetermined threshold. For example, in some implementations, if more than 25% of the points in the entire point cloud are possible outliers, the color-based filtering is not applied. If the thresholds of both the first condition and the second condition are not reached, then the possible outliers are removed from the point cloud.

In some implementations, a single condition may be sufficient. For example, in some RGB-based implementations, if more than 3% of the points in the point cloud are possible outliers, then the color-based filtering is not applied.

Results of using the above-described HSV filtering to remove delocalized gravity-oriented surface noise are shown in FIG. 39. FIG. 39 shows the point cloud with the possible outliers shown in FIG. 38 removed, further removing noise from the gravity-oriented surface from the point cloud.

It will be understood that some implementations may use other processes for removing delocalized gravity-oriented surface noise. For example, in some RGB color space-based implementations, a series of four conditions may be used. According to a first condition (a red channel analysis), the difference between the red channel of a point and the average red channel value for all gravity-oriented surface points is calculated. If the calculated value is below a predetermined threshold $P$, the corresponding point is considered a possible outlier. According to a second condition (red and green channel analysis), the ratio between the red and green channels of a point is compared to the ratio between the mean red and green channels for all the gravity-oriented surface points. If the calculated value is below a predetermined threshold $Q$, the corresponding point is considered a possible outlier. According to a third condition (green and blue channel analysis), the ratio between the green and blue channels of a point is compared to the ratio between the mean green and blue channels for all the gravity-oriented surface points. If the calculated value is below a predetermined threshold $R$, the corresponding point is considered a possible outlier. According to a fourth condition (blue and red channel analysis) the ratio between the blue and red channels of a point is compared to the ratio between the mean blue and red channels for all the gravity-oriented surface points. If the calculated value is below a predetermined threshold S, the corresponding point is considered a possible outlier. If all these conditions are met, then the corresponding point is an outlier, and may be removed from the point cloud.

It will be understood that the features and examples above are not meant to limit the scope of the present disclosure to a single implementation, as other implementations are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an implementation showing a singular component should not necessarily be limited to other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description of the specific implementations so fully reveals the general nature of the disclosure that others can, by applying knowledge within the skill of the relevant art(s) (including the contents of any documents cited and incorporated by reference herein), readily modify and/or adapt for various applications such specific implementations, without undue experimentation and without departing from the general concept of the present disclosure. Such adaptations and modifications are therefore intended to be within the meaning and range of equivalents of the disclosed implementations, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s).

While the above-described implementations have been described and shown with reference to particular steps performed in a particular order, it will be understood that these steps may be combined, sub-divided, or re-ordered without departing from the teachings of the present technology. The steps may be executed in parallel or in series. Accordingly, the order and grouping of the steps is not a limitation of the present technology.

While various implementations of the present disclosure have been described above, it should be understood that they have been presented by way of example, and not limitation. It would be apparent to one skilled in the relevant art(s) that various changes in form and detail could be made therein without departing from the spirit and scope of the disclosure. Thus, the present disclosure should not be limited by any of the above-described implementations, but should be defined only in accordance with the following claims and their equivalents.

## Claims

1. A computer-implemented method of removing noise from a 3D point cloud, the method comprising:

   accessing a 3D point cloud;
   applying a first de-noising phase to the 3D point cloud, the first de-noising phase comprising:

   segmenting the 3D point cloud into regions;
   merging regions into clusters; and
   optimizing the clusters by removing points that are statistical outliers to a cluster from the 3D point cloud;

   applying a second de-noising phase to the 3D point cloud, the second de-noising phase identifying a planar surface in the 3D point cloud and removing points associated with the planar surface from the 3D point cloud; and
   applying a third de-noising phase to the 3D point cloud, the third de-noising phase removing delocalized noise associated with the planar surface from the 3D point cloud.

2. The computer-implemented method of claim 1, wherein segmenting the 3D point cloud into regions comprises geometric-based region growing.

3. The computer-implemented method of claim 1 or claim 2, wherein segmenting the 3D point cloud into regions comprises color-based region growing.

4. The computer-implemented method of any one of claims 1 to 3, wherein merging regions into clusters comprises merging two regions if a difference between an average color of each of the regions is below a predetermined threshold and the regions are neighbor regions.

5. The computer-implemented method of any one of claims 1 to 4, wherein optimizing the clusters by removing points that are statistical outliers to a cluster from the 3D point cloud comprises statistical color outlier filtering.

6. The computer-implemented method of any one of claims 1 to 5, wherein identifying the planar surface in the 3D point cloud comprises identifying a surface in the 3D point cloud that is perpendicular to a reference axis.

7. The computer-implemented method of any one of claims 1 to 6, wherein the points associated with the planar surface excludes points with normal vectors having an orientation that does not correspond to a surface normal orientation of the planar surface.

8. The computer-implemented method of any one of claims 1 to 7, wherein the second de-noising phase further comprises using statistical outlier removal to remove sparse points in the lower third of the 3D point cloud.

9. The computer-implemented method of any one of claims 1 to 8, wherein the third de-noising phase uses color-based filtering to remove delocalized noise associated with the planar surface.

10. A computer-implemented method of generating data points in a 3D point cloud from a plurality of images, comprising:

    obtaining a plurality of world coordinate images from a camera including an inertial measurement unit;
    performing an initial alignment process to realign and scale estimated camera positions to obtain a plurality of estimated coordinate images; and
    refining the initial alignment using a scaling iterative corresponding points method, including a full trajectory process that aligns world and estimated trajectory curves and a single indexed pairs process that applies a scaling iterative corresponding points technique on single pairs from world coordinate images and estimated coordinate images having corresponding indices, and combining the fill trajectory process with the single indexed pairs process.

11. The computer-implemented method of claim 10, further comprising use of a non-scaling iterative corresponding points method applied to a predetermined number of randomly generated pairs for each camera position in a world coordinate system.

12. A computer-implemented method of de-noising a cluster of points in a 3D point cloud using statistical color outlier filtering, each point including color information in a plurality of color channels, the method comprising:

    determining a mean and a standard deviation of each color channel for each point in the cluster of points and a number of neighboring points in the cluster of points;
    determining that a point is an outlier in the cluster if one of the point's color channels has a value that is outside of a predefined multiple of the standard deviation from the mean of that color channel; and
    removing as noise points that are outliers.

13. The computer-implemented method of claim 12, wherein the number of neighboring points is based on a mean number of points inside a volume of a predefined radius.

14. A computer-implemented method of de-noising a 3D point cloud, the method comprising:

identifying a planar surface in the 3D point cloud by identifying a surface in the 3D point cloud that is perpendicular to a reference axis; and removing points associated with the planar surface from the 3D point cloud, by removing points near the planar surface that have normal vectors having an orientation within a predetermined angle of a surface normal orientation of the planar surface.

15. The computer-implemented method of claim 14, wherein the planar surface comprises a gravity-oriented surface, and the reference axis comprises a gravity axis.

FIG. 1

FIG. 2

```
                                                    ⤷ 300

┌──────────────────────────────────────────────┐
│ Obtain a plurality of images from a camera     │──── 302
│ including an inertial measurement unit         │
└──────────────────────────────────────────────┘

┌──────────────────────────────────────────────┐
│ Perform an initial alignment process to        │──── 304
│ realign and scale the estimated camera         │
│ positions                                      │
└──────────────────────────────────────────────┘

┌──────────────────────────────────────────────┐
│          Refine the initial alignment          │──── 306
└──────────────────────────────────────────────┘
```

# FIG. 3

FIG. 4

502

FIG. 5

504

602

604

600

610

612

600

FIG. 6

700

Find the point(s) with the minimum curvature in the unassigned set of points ⎯ 702

If there are multiple points with equal curvature, select one at random as the initial seed point ⎯ 704

Add the initial seed point to a seed point set ⎯ 706

# FIG. 7

FIG. 8

900

Determine neighborhood of the initial seed point — 902

Define a region around the initial seed point based on points in the neighborhood of the initial seed point that meet a geometric criterion. — 904

Add additional points in the neighborhood that meet a seed point threshold to the seed point set and remove the initial seed point from the seed point set — 906

# FIG. 9

FIG. 10

FIG. 11

FIG. 12

○ Seed Point

◇ Neighbor Point

Neighborhood

□ Region

1202

800

$S_2$

$S_1$  $S_{1a}$

1002

$S_{1a}$
$S_2$

802

## FIG. 13

1400

Define new "initial" seed point as point with minimum curvature from the seed point set. — 1402

If new initial seed point is already assigned to a region then set "current" region to the region of the initial seed point. Otherwise start a new region as the "current" region. — 1404

Determine a neighborhood of the new initial seed point. — 1406

For each unassigned point in the neighborhood, if the point "belongs" to the current region based on geometric criterion, then the point is assigned to the current region. Otherwise, the point remains unassigned. — 1408

If the point is a seed point, add the point to the seed point set. — 1410

Remove the initial seed point from the seed point set. — 1412

If the seed point set is not empty, repeat the process from block 1402, to handle another seed point from the seed point set. — 1414

If there are still unassigned points, repeat the process starting again from block 702 of FIG. 7 with the points that remain unassigned. — 1416

Merge a region with a minimum-distance region if the minimum-distance region has a number of points below the small region threshold — 1418

FIG. 14

FIG. 15

Seed Point

Neighbor Point

Neighborhood

Region

1506

800

$S_2$

1602

$S_2$

802

FIG. 16

**FIG. 17**

1800

Find the point(s) with the minimum curvature in the unassigned set of points — 1802

If there are multiple points with equal curvature, select one at random as the initial seed point — 1804

Add the initial seed point to a seed point set — 1806

FIG. 18

1900

Determine neighborhood of the initial seed point — 1902

Define a color-based region around the initial seed point based on points in the neighborhood of the initial seed point that meet a color criterion. — 1904

Add additional points in the neighborhood that meet a seed point threshold to the seed point set and remove the initial seed point from the seed point set — 1906

# FIG. 19

2000

Define new "initial" seed point as point with minimum curvature from the seed point set. — 2002

If new initial seed point is already assigned to a region then set "current" region to the region of the initial seed point. Otherwise start a new region as the "current" region. — 2004

Determine a neighborhood of the new initial seed point. — 2006

For each unassigned point in the neighborhood, if the point "belongs" to the current color-based region based on color criterion, then the point is assigned to the current region. Otherwise, the point remains unassigned. — 2008

If the point is a seed point, add the point to the seed point set. — 2010

Remove the initial seed point from the seed point set. — 2012

If the seed point set is not empty, repeat the process from block 2002, to handle another seed point from the seed point set. — 2014

If there are still unassigned points, repeat the process starting again from block 1802 of FIG. 18 with the points that remain unassigned. — 2016

Merge a region with a minimum-distance region if the minimum-distance region has a number of points below the small region threshold — 2018

FIG. 20

2100

FIG. 21

2302

2304

FIG. 23

2200

**Merge Regions Into Clusters** — 2250

Merge neighbor regions to form clusters. — 2202

Merge small regions with their nearest neighbor regions. — 2204

**Optimize Clusters** — 2252

Calculate the mean and standard deviation of each color channel is calculated for each point (a "specified point") in a cluster and a number of neighbors in the cluster within a defined spherical radius from the specified point. The points for which the means and standard deviations are calculated are referred to as a "nearest-neighbor region." — 2206

the specified point is considered an outlier if one of the point's color channels has a value that is outside of a predefined multiple of the standard deviation from the mean of the nearest-neighbor region for that color channel. — 2208

# FIG. 22

FIG. 24

EP 4 273 792 A1

FIG. 25

FIG. 26

FIG. 27

EP 4 273 792 A1

FIG. 28

FIG. 29

FIG. 30

3100

Detect a surface perpendicular to the gravity axis that is located in the lower third of a point cloud.

3102

Use a ground outlier filter to to determine the outlier points that are not related to the gravity-oriented surface.

3104

Remove the detected outlier points from the gravity-oriented surface.

3106

Repeat one or more times to remove additional gravity-oriented surfaces

Remove the gravity-oriented surface.

3108

Perform surface boundary conditional cleaning.

3110

Determine the remaining points that are within a predetermined threshold n above the gravity-oriented surface(s) of interest and remove the points with difference values below specified thresholds.

3112

Apply statistical outlier removal to remove sparse points.

3114

Realign the point cloud with the gravity axis.

3116

FIG. 31

FIG. 32

FIG. 33

FIG. 34

FIG. 35

FIG. 36

3700

Determine mean H-channel value for the gravity-oriented surface. — 3702

For points in the vicinity of a gravity-oriented surface, compare H-value of the point with the mean H-channel value of the gravity-oriented surface. — 3704

If the difference is less than a predetermined threshold, the point is considered a possible outlier. — 3706

Apply outlier removal conditions to determine whether the possible outliers should be removed. Remove the possible outliers if the conditions are met. — 3708

FIG. 37

FIG. 38

FIG. 39

FIG. 40

FIG. 41

EP 4 273 792 A1

Europäisches Patentamt
European Patent Office
Office européen des brevets

## EUROPEAN SEARCH REPORT

Application Number

EP 22 17 2105

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TRAN TRUNG-THIEN ET AL: "Extraction of Reliable Primitives from Unorganized Point Clouds", 3D RESEARCH, 3D DISPLAY RESEARCH CENTER, SEOUL, vol. 6, no. 4, 1 December 2015 (2015-12-01), pages 1-12, XP035796409, DOI: 10.1007/S13319-015-0076-1 * abstract * * section "2.1 Curved Surface Extraction", "2.1.1 Primitive Type Identification", "2.2 Plane Extraction" * ----- | 1,2,5-8, 14,15 | INV. G06T5/00 G06T7/11 G06T7/187 G06T7/33 G06T7/579 |
| X | TRUJILLO-JIMÉNEZ MAGDA ALEXANDRA ET AL: "body2vec: 3D Point Cloud Reconstruction for Precise Anthropometry with Handheld Devices", JOURNAL OF IMAGING, vol. 6, no. 94, 1 January 2020 (2020-01-01), pages 1-14, XP055973315, DOI: 10.3390/jimaging6090094 * abstract; figures 1,5; table 1 * * sections "2.2. Segmentation Model", "3.1. Mask Segmentation" * ----- | 1-4,9, 12,13 | |

TECHNICAL FIELDS SEARCHED (IPC)

G06T

The present search report has been drawn up for all claims

| Place of search | Date of completion of the search | Examiner |
|---|---|---|
| Munich | 21 October 2022 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

54

Europäisches
Patentamt

European
Patent Office

Office européen
des brevets

Application Number

**EP 22 17 2105**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 12-15

☐ The present supplementary European search report has been drawn up for those parts of the European patent application which relate to the invention first mentioned in the claims (Rule 164 (1) EPC).

**LACK OF UNITY OF INVENTION**
**SHEET B**

The Search Division considers that the present European patent application does not comply with the requirements of unity of invention and relates to several inventions or groups of inventions, namely:

```
1. claims: 1-9, 12-15

        segmenting a 3D point cloud with clustering and outlier
        removal; a planar surface is also removed
                        ---


2. claims: 10, 11

        generating a 3D point cloud from multiple iteratively
        aligned images
                        ---
```